# EUROPEAN PATENT SPECIFICATION

(11) **EP 2 530 774 B1**
(45) Date of publication and mention of the grant of the patent: **30.03.2016**
(21) Application number: 11736782.1
(22) Date of filing: 26.01.2011
(51) Int. Cl.: H01M 8/04, H01M 8/06

(54) **FUEL CELL SYSTEM AND OPERATION METHOD THEREFOR**
BRENNSTOFFZELLENSYSTEM UND BETRIEBSVERFAHREN DAFÜR
SYSTÈME DE PILE À COMBUSTIBLE ET PROCÉDÉ POUR SON EXPLOITATION

(30) Priority: 27.01.2010 JP 2010014953
(43) Date of publication of application: 05.12.2012
(73) Proprietor: Panasonic Corporation, Kadoma-shi Osaka 571-8501 (JP)
(72) Inventor: KOKUBU, Hirofumi, Chuo-ku, Osaka-shi, Osaka 540-6207 (JP); KUSUMURA, Koichi, Chuo-ku, Osaka-shi, Osaka 540-6207 (JP); NAKAMURA, Akinari, Chuo-ku, Osaka-shi, Osaka 540-6207 (JP); URATA, Takayuki, Chuo-ku, Osaka-shi, Osaka 540-6207 (JP)
(74) Representative: Grünecker Patent- und Rechtsanwälte PartG mbB
(86) International application number: PCT/JP2011/000407
(87) International publication number: WO 2011/093066

(56) References cited:
- JP-A- 3 057 163
- JP-A- 7 320 766
- JP-A- 8 031 443
- JP-A- H07 320 766
- JP-A- 2006 300 446
- JP-A- 2007 257 953
- JP-A- 2008 171 806
- JP-A- 2008 251 447
- JP-A- 2009 009 886
- JP-A- 2010 250 949

## Description

### Technical Field

The present invention relates to a fuel cell system which includes a tank configured to store moisture contained in an exhaust gas from a fuel cell apparatus, and a method for operating the fuel cell system.

### Background Art

Fuel cells generate power through electrochemical reaction between a fuel gas containing hydrogen and an oxidizing gas containing oxygen, and as a result, generate water and heat Such a fuel cell is capable of obtaining chemical energy of a fuel as electrical energy in a direct manner, that is, without converting the chemical energy into mechanical energy. This realizes high power generation efficiency.

There is no general infrastructure to supply fuel cell systems including such a fuel cell with a fuel gas (hydrogen gas) which is used as a fuel for power generation. For this reason, fuel cell systems usually include a hydrogen generator. The hydrogen generator generates a hydrogen-rich fuel gas through a steam reforming reaction which uses water and a raw material gas such as a natural gas. The steam reforming reaction progresses owing to heating by a burner which is included in the hydrogen generator. Combustion occurs at the burner when the burner is supplied with the raw material gas, and also when the burner is supplied with a fuel gas unused in power generation which is discharged from the fuel cell (hereinafter, an off gas).

There are known fuel cell power generators that include a recovery water tank for recovering water generated from an off gas discharged from a fuel cell body and for recovering water generated from a flue gas discharged from a burner (see Patent Literature 1, for example). Fig. 18 is a schematic diagram showing a schematic configuration of a fuel cell power generator disclosed in Patent Literature 1.

As shown in Fig. 18, a fuel cell power generator 201 disclosed in Patent Literature 1 includes:
a fuel cell body 202, a reformer (hydrogen generator) 203 including a burner 203a; a reaction air blower 204; a fuel preheater 205; a discharged heat recovery device 206; and a generated water recovery device 210. In the fuel cell power generator 201 disclosed by Patent Literature 1, the generated water recovery device 210 includes an exhaust tower 207 having an air outlet 207a at its top and includes a recovery water tank 209 connected to a lower part of the exhaust tower 207. In the generated water recovery device 210, a substantially cylindrical filter 208 is provided, in a detachable manner, below an off gas piping connection and a flue gas piping connection of the generated water recovery device 210. The filter 208 captures dusts and/or foreign matter entering through the air outlet 207a.

According to this configuration, the fuel cell power generator 201 disclosed by Patent Literature 1 is capable of capturing, by means of the filter 208, dusts and/or foreign matter that enter through the air outlet 207a, thereby suppressing dusts and/or foreign matter from being mixed into recovery water.

### Citation List

### Patent Literature

PTL 1: Japanese Laid-Open Patent Application Publication No. 2008-176999

### Summary of Invention

### Technical Problem

However, the fuel cell power generator 201 disclosed in Patent Literature 1 has a problem in that when blockage occurs at the air outlet 207a, the off gas and the flue gas cannot be discharged to the outside of the fuel cell power generator 201 if the filter 208 is clogged to a certain degree. If the off gas and the like cannot be discharged to the atmosphere, the combustion stability of the burner 203a may be impaired. At worst, the internal pressure of the fuel cell body 202 and the reformer 203 increases, and this may cause damage to these devices.

The present invention solves the above conventional problems. An object of the present invention is to provide a fuel cell system and a method for operating the fuel cell system which are capable of discharging, in a case where a flow of an exhaust gas within an exhaust gas passage is blocked at a position downstream from a water tank (e.g., a case where an air outlet of the exhaust gas passage is blocked), the exhaust gas trough a drain outlet of the water tank, thereby suppressing an increase in the internal pressure of a hydrogen generator and/or a fuel cell, and thus preventing damage to the hydrogen generator and/or the fuel cell.

### Solution to Problem

In order to solve the above conventional problems and to achieve the object mentioned above, a fuel cell system according to the present invention is defined in claim 1.

Accordingly, even if a flow of the exhaust gas within the exhaust gas passage is blocked at a position downstream from the water tank, for example, due to an air outlet of the exhaust gas passage being blocked, the exhaust gas can be discharged to the atmosphere through the drain outlet of the water tank. In this manner, an increase in the internal pressure of the fuel cell apparatus can be suppressed, and thus damage to the fuel cell apparatus can be prevented.

A fuel cell system operation method according to the present invention is a method for operating a fuel cell system according to claim 12.

Accordingly, even if a flow of the exhaust gas within the exhaust gas passage is blocked at a position downstream from the water tank, for example, due to an air outlet of the exhaust gas passage being blocked, the exhaust gas can be discharged to the atmosphere through the drain outlet, of the water tank. If the exhaust gas is discharged to the atmosphere through the drain outlet of the water tank, the operation of the fuel cell system is stopped, and accordingly, the discharge of the exhaust gas from the fuel cell apparatus is stopped. In this manner, an increase in the internal pressure of the fuel cell apparatus can be suppressed, and thus damage to the fuel cell apparatus can be prevented.

The above object, other objects, features, and advantages of the present invention will be made clear by the following detailed description of preferred embodiments with reference to the accompanying drawings.

### Advantageous Effects of Invention

According to the fuel cell system and the method for operating the fuel cell system of the present invention, even if the air outlet is blocked, the exhaust gas can be discharged through the drain outlet of the water tank. This makes it possible to prevent the internal pressure of a hydrogen generator and/or a fuel cell of the fuel cell system from reaching their withstand pressure. Thus, according to the fuel cell system and the method for operating the fuel cell system of the present invention, damage to the hydrogen generator and/or the fuel cell can be prevented.

### Brief Description of Drawings

[Fig. 1] Fig. 1 is a schematic diagram showing a schematic configuration of a fuel cell system according to Embodiment 1 of the present invention.
[Fig. 2] Fig. 2 is a schematic diagram showing a schematic configuration of a fuel cell in the fuel cell system shown in Fig. 1.
[Fig. 3] Fig. 3 is a cross-sectional view showing a schematic configuration of a cell in the fuel cell shown in Fig. 2.
[Fig. 4A to FIG. 4D] Fig. 4A to Fig. 4D are schematic diagrams each showing a schematic configuration near a water tank in the fuel cell system shown in Fig. 1.
[Fig. 5] Fig. 5 is a schematic diagram showing a schematic configuration of a fuel cell system according to Variation 1 of Embodiment 1.
[Fig. 6] Fig. 6 is a schematic diagram showing a schematic configuration of a fuel cell system according to Variation 2 of Embodiment 1.
[Fig. 7] Fig. 7 is a schematic diagram showing a schematic configuration of a fuel cell system according to Variation 3 of Embodiment 1.
[Fig. 8] Fig. 8 is a schematic diagram showing a schematic configuration of a fuel cell system according to Variation 4 of Embodiment 1.
[Fig. 9] Fig. 9 is a schematic diagram showing a schematic configuration of a fuel cell system according to Embodiment 2 of the present invention.
[Fig. 10] Fig. 10 is a flowchart schematically showing a water level determination operation performed by a fuel cell system according to Embodiment 3 of the present invention.
[Fig. 11] Fig. 11 is a schematic diagram showing a schematic configuration of a fuel cell system according to Embodiment 4 of the present invention.
[Fig. 12] Fig. 12 is a schematic diagram showing a schematic configuration of a fuel cell system according to Embodiment 5 of the present invention.
[Fig. 13] Fig. 13 is a graph showing a relationship between power generated by the fuel cell system according to Embodiment 5 of the present invention and a raw material flow rate, and a relationship between the power generated by the fuel cell system according to Embodiment 5 and a first raw material flow rate.
[Fig. 14] Fig. 14 is a schematic diagram showing a schematic configuration of a fuel cell system according to Embodiment 6 of the present invention.
[Fig. 15] Fig. 15 is a schematic diagram showing a schematic configuration of a fuel cell system according to Embodiment 7 of the present invention.
[Fig. 16] Fig. 16 is a graph showing a relationship between power generated by the fuel cell system according to Embodiment 7 of the present invention and an oxidizing gas flow rate, and a relationship between the power generated by the fuel cell system according to Embodiment 7 and a first oxidizing gas flow rate.
[Fig. 17] Fig. 17 is a schematic diagram showing a schematic configuration of a fuel cell system according to Embodiment 8 of the present invention.

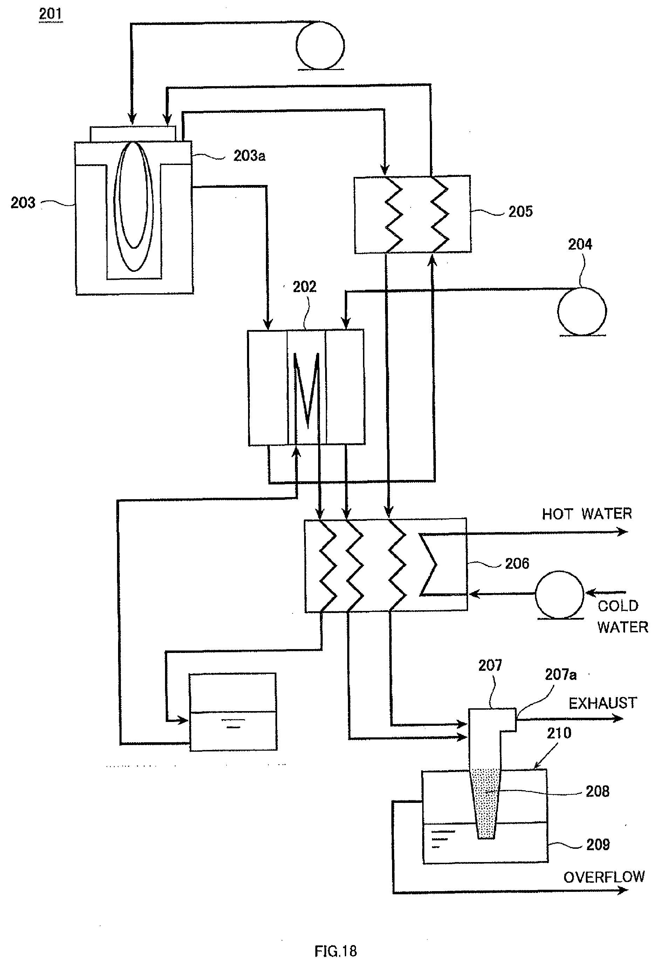

[Fig. 18] Fig. 18 is a schematic diagram showing a schematic configuration of a fuel cell power generator disclosed in Patent Literature 1.

### Description of Embodiments

Hereinafter, embodiments of the present invention will be described with reference to the drawings. In the drawings, the same or corresponding components are denoted by the same reference signs, and a repetition of the same description is avoided. In the drawings, only the components necessary for describing the present invention are shown, and the other components are omitted. Further, the present invention is not limited to the embodiments below.

### (Embodiment 1)

A fuel cell system according to Embodiment 1 of the present invention includes: a fuel cell apparatus configured to generate power by using an oxidizing gas supplied thereto, the oxidizing gas containing a raw material and oxygen; an exhaust gas passage through which an exhaust gas from the fuel cell apparatus is discharged to the atmosphere; and a water tank configured to store water present within the exhaust gas. The fuel cell system according to Embodiment 1 serves as an example where the water tank includes a first reservoir, a second reservoir, and a communication part which is configured to allow the first reservoir and the second reservoir to communicate with each other at a lower part of the water tank. The second reservoir of the water tank is provided with a drain outlet which is disposed above the communication part. The exhaust gas passage is connected to the first reservoir of the water tank. The exhaust gas passage is configured such that: in cases where a flow of the exhaust gas within the exhaust gas passage is not blocked at any position downstream from the water tank, the exhaust gas is discharged to the atmosphere from the exhaust gas passage; and in cases where a flow of the exhaust gas within the exhaust gas passage is blocked at a position downstream from the water tank, the exhaust gas is discharged to the atmosphere through the drain outlet of the water tank.

The "fuel cell apparatus" herein refers to an apparatus that includes a fuel cell having one or more cells. The "fuel cell apparatus" may further include a hydrogen generator if the fuel cell is, for example, a polymer electrolyte fuel cell or an indirect internal reforming solid oxide fuel cell. However, it is not essential for the fuel cell apparatus to include a hydrogen generator if the fuel cell is a direct internal reforming solid oxide fuel cell.

The "cases where a flow of the exhaust gas within the exhaust gas passage is blocked at a position downstream from the water tank" refer to cases where the passage resistance of the exhaust gas passage is increased. These cases include a case where a passage that is part of the exhaust gas passage and that is downstream from the water tank (hereinafter, referred to as a downstream passage) is fully blocked as well as a case where the downstream passage is partially blocked. Accordingly, in "cases where a flow of the exhaust gas within the exhaust gas passage is blocked at a position downstream from the water tank", the exhaust gas may be discharged to the atmosphere not only through the drain outlet of the water tank, but also through the downstream end (i.e., an air outlet) of the exhaust gas passage.

Examples of "cases where a flow of the exhaust gas within the exhaust gas passage is blocked at a position downstream from the water tank" include a case where the downstream end or the downstream passage of the exhaust gas passage is blocked by foreign matter or the like, and a case where condensation occurs in the downstream passage and the moisture of the condensation blocks the passage.

In the fuel cell system according to Embodiment 1, the exhaust gas passage includes: a first passage of which one end is connected to the fuel cell apparatus and the other end is connected to the first reservoir of the water tank; and a second passage of which one end is connected to the first reservoir of the water tank and the other end is open to the atmosphere. The exhaust gas passage may be configured such that if the flow of the exhaust gas is blocked at the second passage, the exhaust gas is discharged to the atmosphere through the drain outlet of the water tank.

Further, in the fuel cell system according to Embodiment 1, the first reservoir and the second reservoir may be formed with a partition wall which is provided in a manner to separate the inner space of the water tank.

Still further, in the fuel cell system according to Embodiment 1, the fuel cell apparatus includes a fuel cell, and the communication part and the drain outlet may be provided at the water tank such that a water pressure difference corresponding to the height of the lower end of the drain outlet from the upper end of the communication part is less than the withstand pressure of the fuel cell.

The "withstand pressure of the fuel cell" herein refers to a pressure up to which the safety of the fuel cell from damage due to pressure is guaranteed. Specifically, the "withstand pressure of the fuel cell" refers to a lower one of the following pressures that may be reached due to an increase in the internal pressure of manifolds: a pressure that, if exceeded, causes the sealing ability of gaskets to be lost; and a pressure that, if exceeded, causes damage to separators.

Further, in the fuel cell system according to Embodiment 1, the fuel cell apparatus may include a hydrogen generator configured to reform a raw material to generate a fuel gas, and the communication part and the drain outlet may be provided at the water tank such that the water pressure difference corresponding to the height of the lower end of the drain outlet from the upper end of the communication part is less than the withstand pressure of the hydrogen generator.

The "withstand pressure of the hydrogen generator" herein refers to a pressure up to which the safety of the hydrogen generator from damage due to pressure is guaranteed.

Still further, the fuel cell system according to Embodiment 1 may include: a raw material supply device configured to supply a raw material to the fuel cell apparatus; and an oxidizing gas supply device configured to supply an oxidizing gas to the fuel cell apparatus. The communication part and the drain outlet may be provided at the water tank such that the water pressure difference corresponding to the height of the lower end of the drain outlet from the upper end of the communication part is less than the shutoff pressure of one of the raw material supply device and the oxidizing gas supply device.

The "shutoff pressure" herein refers to the highest pressure of the raw material supply device or the oxidizing gas supply device in a state where their discharge end is closed.

### [Configuration of Fuel Cell System]

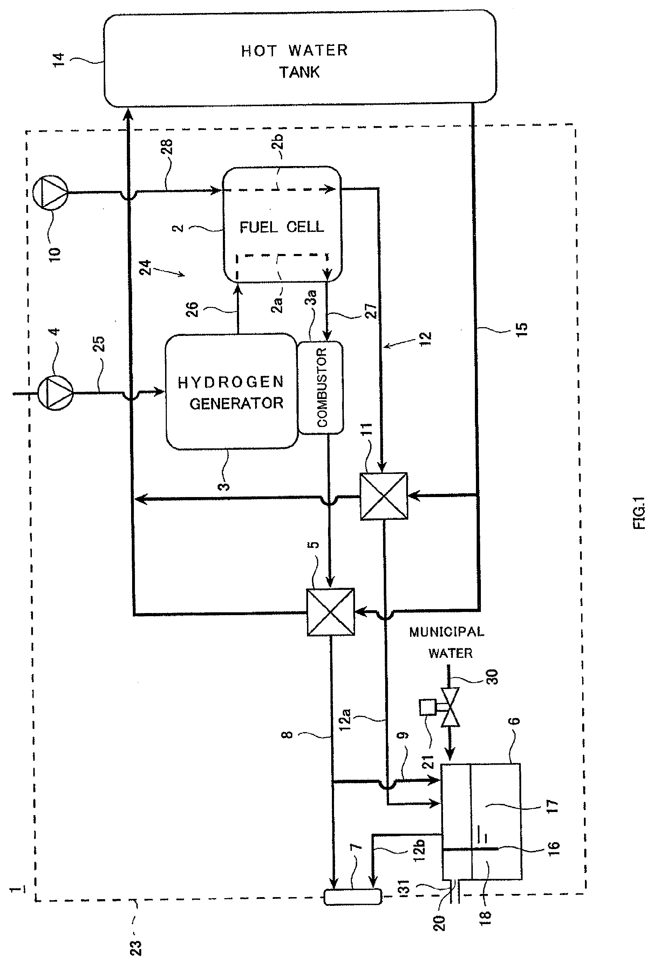

Fig. 1 is a schematic diagram showing a schematic configuration of the fuel cell system according to Embodiment 1 of the present invention.

As shown in Fig. 1, a fuel cell system 1 according to Embodiment 1 of the present invention includes: a raw material supply device 4; a fuel cell apparatus 24 including a fuel cell 2 and a hydrogen generator 3; an oxidizing gas supply device 10; a flue gas heat exchanger 5; an oxidizing exhaust gas heat exchanger 11; a water tank 6; a hot water tank 14; and a casing 23. The casing 23 is provided with an air outlet 7.

Although in Embodiment 1 the fuel cell apparatus 24 includes the fuel cell 2 and the hydrogen generator 3, the present invention is not limited thereto. The fuel cell apparatus 24 need not include the hydrogen generator 3 if, for example, the fuel cell 2 is a direct internal reforming solid oxide fuel cell or there is infrastructure to supply a hydrogen gas.

The hydrogen generator 3 includes a reformer (not shown) and a combustor 3a. The fuel cell 2 (to be exact, an internal fuel gas channel 2a of the fuel cell 2) is connected to the combustor 3a via an off fuel gas passage 27, which will be described below. Accordingly, a combustible gas such as an off fuel gas is supplied to the combustor 3a via the internal fuel gas channel 2a of the fuel cell 2.

The upstream end of a flue gas passage (exhaust gas passage, i.e., a third passage) 8 is connected to the combustor 3a The downstream end of the flue gas passage 8 is connected to the air outlet 7. The flue gas heat exchanger 5 is provided at a position along the flue gas passage 8. The upstream end of a flue gas condensed water passage (fourth passage) 9 is connected to the flue gas passage 8 at a position downstream from the flue gas heat exchanger 5. The downstream end of the flue gas condensed water passage 9 is connected to a first reservoir 17 of the water tank 6, which will be described below.

The flue gas heat exchanger 5 is configured to perform heat exchange between a flue gas flowing through the flue gas passage 8 and water flowing through a hot water circulation passage 15. Various types of heat exchangers, including a total enthalpy heat exchanger, may be used as the flue gas heat exchanger 5.

Accordingly, at the combustor 3a, a combustible gas such as a fuel gas supplied from the internal fuel gas channel 2a and separately supplied combustion air are combusted, and thereby the flue gas is generated. The generated flue gas heats up the reformer, for example, and then flows through the flue gas passage 8. Thereafter, the flue gas is discharged to the outside of the fuel cell system 1 through the air outlet 7. Moisture contained in the flue gas exchanges heat with water at the flue gas heat exchanger 5, and is thereby condensed into water. The water flows through the flue gas condensed water passage 9, and is then stored into the water tank 6.

The raw material supply device 4 is connected to the hydrogen generator 3 via a raw material supply passage 25. The raw material supply device 4 may be configured in any form, so long as the raw material supply device 4 is configured to supply a raw material to the hydrogen generator 3 while adjusting a flow rate of the raw material. The raw material supply device 4 may be configured as a blower, for example. Examples of the raw material herein include a natural gas that contains methane as a main component and LP gas.

The reformer of the hydrogen generator 3 includes a reforming catalyst. The reforming catalyst is, for example, any substance that catalyzes a steam reforming reaction through which to generate a hydrogen-containing gas from the raw material and steam. Examples of the preforming catalyst include a ruthenium based catalyst in which a catalyst carrier such as alumina carries ruthenium (Ru) and a nickel based catalyst in which a catalyst carrier such as alumina carries nickel (Ni).

At the reformer, a reforming reaction occurs between the raw material supplied from the raw material supply device 4 and separately supplied steam (water), and thereby a hydrogen-containing gas is generated. The generated hydrogen-containing gas flows through a fuel gas supply passage 26 as a fuel gas, and is then supplied to the internal fuel gas channel 2a of the fuel cell 2.

Although in Embodiment 1 the hydrogen-containing gas generated at the reformer is sent to the fuel cell 2 as a fuel gas, the present invention is not limited thereto. For example, a shift converter including a shift conversion catalyst (e.g., a copper-zinc based catalyst) for reducing carbon monoxide in the hydrogen-containing gas sent from the reformer, or a carbon monoxide remover including an oxidation catalyst (e.g., a ruthenium based catalyst) or a methanation catalyst (e.g., a ruthenium based catalyst), may be provided within the hydrogen generator 3. Then, the hydrogen-containing gas that has passed through such a device may be sent to the fuel cell 2.

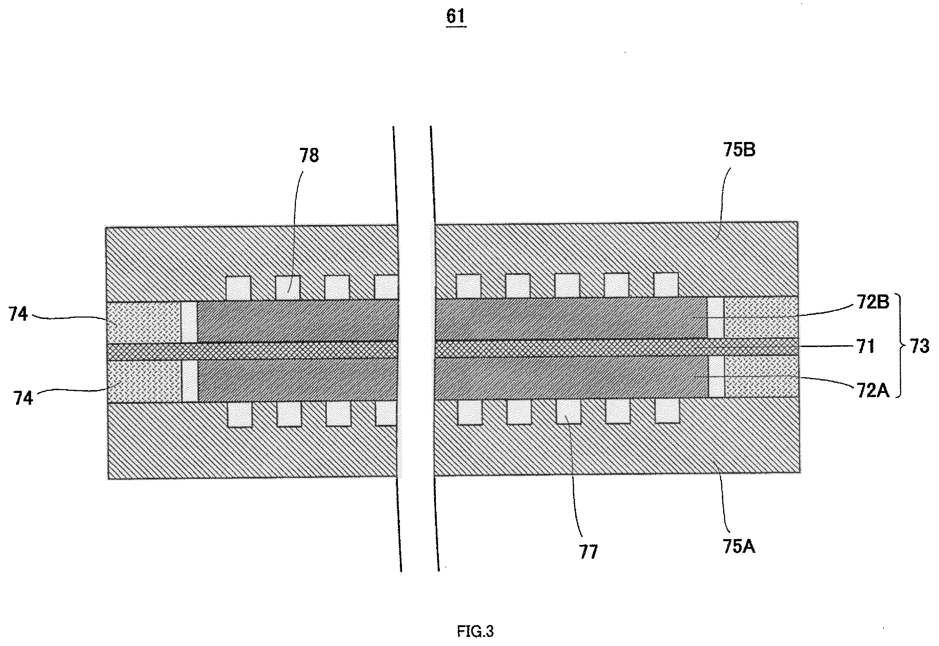

The fuel cell 2 includes an anode and a cathode (see Fig. 3). The fuel cell 2 also includes the internal fuel gas channel 2a through which the fuel gas is supplied to the anode, and an internal oxidizing gas channel 2b through which an oxidizing gas is supplied to the cathode. Various fuel cells may be used as the fuel cell 2, such as a polymer electrolyte fuel cell, direct internal reforming solid oxide fuel cell, or indirect internal reforming solid oxide fuel cell. The configuration of the fuel cell 2 will be described below in detail.

The oxidizing gas supply device 10 is connected to the upstream end of the internal oxidizing gas channel 2b of the fuel cell 2 via an oxidizing gas supply passage 28. The oxidizing gas supply device 10 may be configured in any form, so long as the oxidizing gas supply device 10 is configured to supply an oxidizing gas (air) to the internal oxidizing gas channel 2b of the fuel cell 2. For example, a blower, sirocco fan, etc., that is, a fan device, may be used as the oxidizing gas supply device 10.

An oxidizing exhaust gas passage (exhaust gas passage) 12 is connected to the downstream end of the internal oxidizing gas channel 2b. The oxidizing exhaust gas passage 12 includes a first oxidizing exhaust gas passage (first passage) 12a and a second oxidizing exhaust gas passage (second passage) 12b. The first oxidizing exhaust gas passage 12a connects the internal oxidizing gas channel 2b of the fuel cell 2 and the first reservoir 17 of the water tank 6. The second oxidizing exhaust gas passage 12b connects the first reservoir 17 of the water tank 6 and the air outlet 7. The oxidizing exhaust gas heat exchanger 11 is provided at a position along the first oxidizing exhaust gas passage 12a.

The oxidizing exhaust gas heat exchanger 11 is configured to perform heat exchange between an oxidizing exhaust gas flowing through the first oxidizing exhaust gas passage 12a and water flowing through the hot water circulation passage 15. Various types of heat exchangers, including a total enthalpy heat exchanger, may be used as the oxidizing exhaust gas heat exchanger 11.

Accordingly, in the fuel cell 2, the fuel gas from the hydrogen generator 3 is supplied to the internal fuel gas channel 2a, and the oxidizing gas from the oxidizing gas supply device 10 is supplied to the internal oxidizing gas channel 2b. Then, the fuel gas that has reached the internal fuel gas channel 2a is supplied to the anode while flowing through the internal fuel gas channel 2a. Also, the oxidizing gas that has reached the internal oxidizing gas channel 2b is supplied to the cathode while flowing through the internal oxidizing gas channel 2b. The fuel gas supplied to the anode and the oxidizing gas supplied to the cathode react with each other, and thereby electric power and heat are generated.

It should be noted that the generated power is supplied to an external power load (e.g., a household electrical appliance) by means of a power conditioner which is not shown. Also, the generated heat is recovered by a heating medium flowing through a heating medium passage which is not shown. The heat recovered by the heating medium may be used for heating, for example, water that passes through the hot water circulation passage 15.

The fuel gas that is unused in the fuel cell 2 is supplied to the combustor 3a of the hydrogen generator 3 as an off fuel gas. Also, the oxidizing gas that is unused in the fuel cell 2 (hereinafter, referred to as an oxidizing exhaust gas) flows through the oxidizing exhaust gas passage 12, and is then discharged to the outside of the fuel cell system 1. Moisture contained in the oxidizing exhaust gas exchanges heat with water at the oxidizing exhaust gas heat exchanger 11, and is thereby condensed into water. The water flows through the first oxidizing exhaust gas passage 12a, and is then stored into the water tank 6.

The hot water tank 14 herein is formed to extend in the vertical direction. The upstream end of the hot water circulation passage 15 is connected to a lower part of the hot water tank 14, and the downstream end of the hot water circulation passage 15 is connected to an upper part of the hot water tank 14. The hot water circulation passage 15 is configured to branch into two passages along the way, and the two branch passages are formed to merge. The flue gas heat exchanger 5 is provided at one of the two branch passages of the hot water circulation passage 15, and the oxidizing exhaust gas heat exchanger 11 is provided at the other one of the two branch passages. Accordingly, low-temperature water stored in the lower part of the hot water tank 14 flows through the hot water circulation passage 15, and is then heated at, for example, the flue gas heat exchanger 5. As a result, the heated water is supplied as hot water to the upper part of the hot water tank 14.

Although in Embodiment 1 the hot water circulation passage 15 is configured to branch into two passages and the two branch passages are formed to merge, the present invention is not limited thereto. The hot water circulation passage 15 may be configured as a single passage. In this case, the flue gas heat exchanger 5 may be provided along the hot water circulation passage 15 at a position upstream from the oxidizing exhaust gas heat exchanger 11, or alternatively, the oxidizing exhaust gas heat exchanger 11 may be provided at a position upstream from the flue gas heat exchanger 5.

### [Configuration of Fuel Cell]

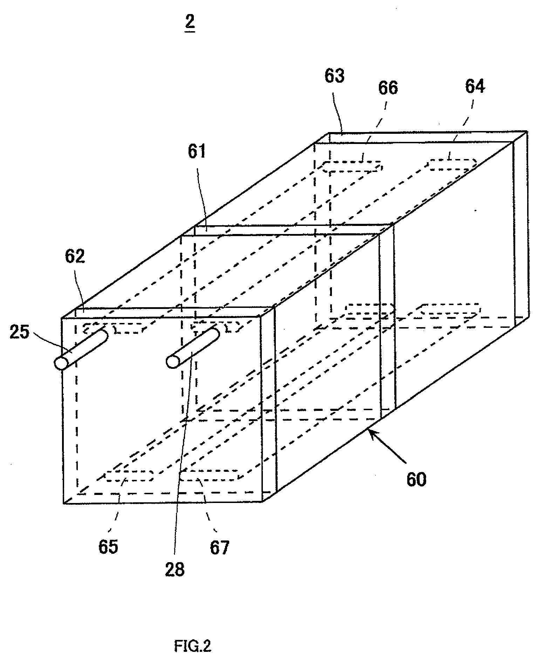

Next, a configuration of the fuel cell 2 in the fuel cell system 1 according to Embodiment 1 is described with reference to Fig. 2 and Fig. 3.

Fig. 2 is a schematic diagram showing a schematic configuration of the fuel cell in the fuel cell system shown in Fig. 1. It should be noted that in Embodiment 1, a polymer electrolyte fuel cell (hereinafter, referred to as a PEFC) is used as the fuel cell 2. Accordingly, described below is a configuration of the PEFC.

As shown in Fig. 2, the fuel cell 2 includes: a cell stack body 60 in which a plurality of cells 61 are stacked in their thickness direction; end plates 62 and 63 disposed at both ends of the cell stack body 60, respectively; and fasteners (not shown) with which to fasten the cell stack body 60 and the end plates 62 and 63 in the stacking direction of the cells 61. An insulating plate and a current collector (which are not shown) are disposed between the end plate 62 and the cell stack body 60. Also, an insulating plate and a current collector (which are not shown) are disposed between the end plate 63 and the cell stack body 60.

The cell stack body 60 includes a fuel gas supply manifold 64, an oxidizing gas supply manifold 66, a fuel gas discharge manifold 65, and an oxidizing gas discharge manifold 67, each of which is provided in a manner to extend in the stacking direction of the cells 61. Here, the fuel gas supply passage 26 is connected to the fuel gas supply manifold 64, and the off fuel gas passage 27 is connected to the fuel gas discharge manifold 65 (see Fig. 1). Further, the oxidizing gas supply passage 28 is connected to the oxidizing gas supply manifold 66, and the oxidizing exhaust gas passage 12 is connected to the oxidizing gas discharge manifold 67 (see Fig. 1).

### [Cell Configuration]

Fig. 3 is a cross-sectional view showing a schematic configuration of a cell in the fuel cell shown in Fig. 2. It should be noted that a part of the configuration is omitted in Fig. 3.

As shown in Fig. 3, the cell 61 includes an MEA(Membrane-ElectrodeAssembly) 73, gaskets 74, an anode separator 75A, and a cathode separator 75B.

The MEA 73 includes a polymer electrolyte membrane 71 which selectively transports hydrogen ion, an anode 72A, and a cathode 72B. It should be noted that manifold holes such as a fuel gas supply manifold hole (not shown) are formed through respective peripheral portions of the polymer electrolyte membrane 71, extending in the thickness direction. The anode 72A is provided on one main surface of the polymer electrolyte membrane 71, and the cathode 72B is provided on the other main surface of the polymer electrolyte membrane 71.

A pair of fluororubber doughnut-shaped gaskets 74 are provided, such that each of which surrounds a corresponding one of the anode 72A and the cathode 72B of the MEA 73. The polymer electrolyte membrane 71 is interposed between the pair of fluororubber doughnut-shaped gaskets 74. This prevents fuel gas leakage and/or oxidizing gas leakage to the outside of the battery, and also prevents these gases from being mixed with each other in the cell 61. It should be noted that manifold holes such as a fuel gas supply manifold hole (not shown), which are through-holes, are formed through respective peripheral portions of each gasket 74, extending in the thickness direction.

The anode separator 75A and the cathode separator 75B, which are electrically conductive separators, are provided in a manner to sandwich the MEA 73 and the gaskets 74. In this manner, the MEA 73 is mechanically fixed. Accordingly, when a plurality of cells 61 are stacked in the thickness direction, the MEA 73 of each cell 61 is electrically connected. It should be noted that a metal having excellent thermal conductivity and electrical conductivity, a graphite, or a graphite-resin mixture may be used for the separators 75A and 75B. For example, a mixture of carbon powder and a binder (solvent) prepared by injection molding, a titanium plate of which the surface is gold-plated, or a stainless steel plate of which the surface is gold-plated, may be used.

One main surface, of the anode separator 75A, that is in contact with the anode 72A (hereinafter, referred to as an inner face) is provided with a groove-shaped fuel gas channel 77 through which the fuel gas flows. Similarly, one main surface, of the cathode separator 75B, that is in contact with the cathode 72B (hereinafter, referred to as an inner face) is provided with a groove-shaped oxidizing gas channel 78 through which the oxidizing gas flows. It should be noted that manifold holes such as a fuel gas supply manifold hole (not shown) are formed through respective peripheral portions of the anode separator 75A and through respective peripheral portions of the cathode separator 75B, extending in the thickness direction. The fuel gas channel 77 and the oxidizing gas channel 78 may be in any shape. For example, these channels may be formed in a serpentine shape or in a linear shape when seen in the thickness direction of the cell 61.

The cell stack body 60 is formed by stacking multiple cells 61, each of which has the above-described structure, in their thickness direction. When the multiple cells 61 are stacked, their manifold holes are connected, such as the fuel gas supply manifold holes (not shown) which are formed through, for example, the polymer electrolyte membranes 71 of the respective multiple cells 61. As a result, manifolds such as the fuel gas supply manifold 64 are formed (see Fig. 2). It should be noted that the fuel gas supply manifold 64, the fuel gas channel 77, and the fuel gas discharge manifold 65 form the internal fuel gas channel 2a, and that the oxidizing gas supply manifold 66, the oxidizing gas channel 78, and the oxidizing gas discharge manifold 67 form the internal oxidizing gas channel 2b.

### [Configuration of Water Tank]

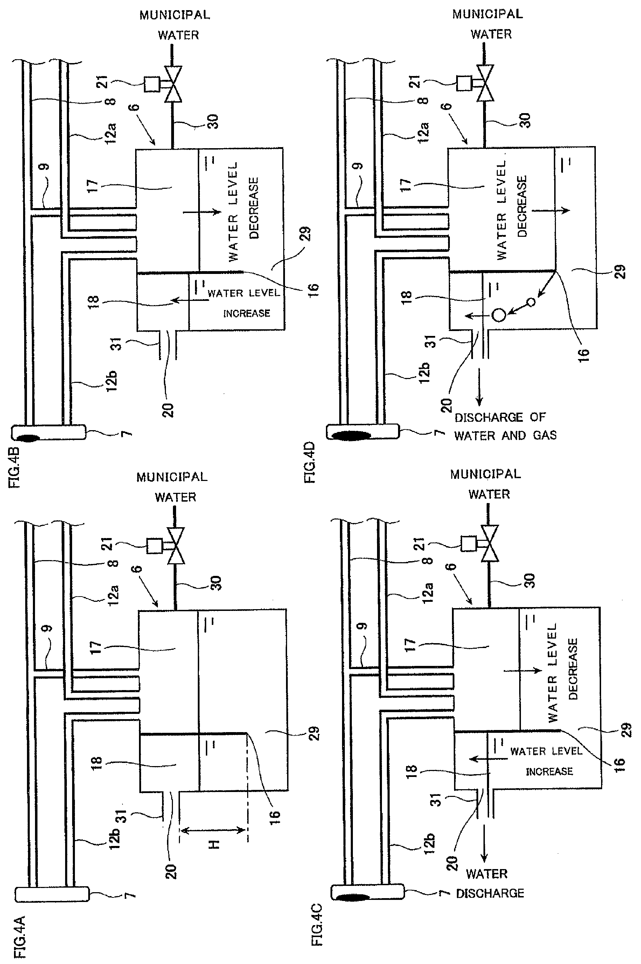

Next, a configuration of the water tank 6 in the fuel cell system 1 according to Embodiment 1 is described in detail with reference to Fig. 1 and Fig. 4A to Fig. 4D.

Fig. 4A to Fig. 4D are schematic diagrams each showing a schematic configuration near the water tank in the fuel cell system shown in Fig. 1. Shown in Fig. 4A is a state where the downstream passage of the flue gas passage 8, which is downstream from the water tank 6 (i.e., downstream from a position at which the flue gas passage 8 is connected to the flue gas condensed water passage 9), and the second oxidizing exhaust gas passage 12b of the oxidizing exhaust gas passage 12, are not blocked. Each of Fig. 4B to Fig. 4D shows a state where at least one of the downstream passage of the flue gas passage 8, which is downstream from the water tank 6, and the second oxidizing exhaust gas passage 12b is blocked.

As shown in Fig. 4A to Fig. 4D, the water tank 6 of the fuel cell system 1 according to Embodiment 1 includes: the first reservoir 17; a second reservoir 18; and a communication part 29 which is formed to allow the first reservoir 17 and the second reservoir 18 to communicate with each other at a lower part of the water tank 6. Specifically, a partition wall 16 is provided within the water tank 6, and the partition wall 16 divides the inner space of the water tank 6. The partition wall 16 is formed to extend downward from the ceiling of the water tank 6, such that space is formed between the partition wall 16 and the bottom of the water tank 6. The space between the partition wall 16 and the bottom of the water tank 6 serves as the communication part 29.

A water supply passage 30 is connected to the first reservoir 17 of the water tank 6. The water supply passage 30 is configured such that municipal water flows therethrough. A water supply valve (water supply device) 21 is provided at a position along the water supply passage 30. The water supply valve 21 is configured to allow the municipal water to flow through the water supply passage 30, and to block the municipal water from flowing through the water supply passage 30. Various types of valves such as an on-off valve may be used as the water supply valve 21.

The second reservoir 18 of the water tank 6 is provided with a drain outlet 20, which is positioned above the communication part 29. The upstream end of a drainage passage 31 is connected to the drain outlet 20. The downstream end of the drainage passage 31 is open, at a hopper, to the outside of the fuel cell system 1 (i.e., to the atmosphere), and is connected to a sewage pipe of which one end is connected to sewerage.

In the second reservoir 18 of the water tank 6, the position (height) of the drain outlet 20 is set such that if at least one of the downstream passage of the flue gas passage 8, which is downstream from the water tank 6, and the second oxidizing exhaust gas passage 12b is blocked, then the pressure within the first reservoir 17 at a time when a gas within the first reservoir 17 is discharged to the atmosphere through the drain outlet 20 is no higher than the withstand pressure of the fuel cell 2. In other words, the drain outlet 20 and the partition wall 16 may be provided at the water tank 6 such that a water pressure difference corresponding to the height H (see Fig. 4A) of the lower end of the drain outlet 20 from the upper end of the partition wall 16 is less than the withstand pressure of the fuel cell 2.

The "withstand pressure of the fuel cell 2" refers to a pressure up to which the safety of the fuel cell 2 from damage due to pressure is guaranteed. Specifically, the "withstand pressure of the fuel cell" refers to a lower one of the following pressures that may be reached due to an increase in gas pressure within the manifolds (manifold holes): a pressure that, if exceeded, causes the sealing ability of the gaskets 74 to be lost; and a pressure that, if exceeded, causes damage to the separators 75A and 75B. If the withstand pressure of the fuel cell 2 is A kpa, then the height H (mm) is A× 102 mm since 1 kPa =102 mmH₂O. Therefore, it is preferred that the drain outlet 20 and the partition wall 16 are provided at the water tank 6 such that the height H of the lower end of the drain outlet 20 from the upper end of the partition wall 16 is less than A × 102mm.

In Embodiment 1, the drain outlet 20 and the partition wall 16 are provided at the water tank 6 such that the water pressure difference corresponding to the height H of the lower end of the drain outlet 20 from the upper end of the partition wall 16 is less than the withstand pressure of the fuel cell 2. However, the present invention is not limited thereto. As an alternative example, the drain outlet 20 and the partition wall 16 may be provided at the water tank 6 such that the water pressure difference corresponding to the height H of the lower end of the drain outlet 20 from the upper end of the partition wall 16 is less than the withstand pressure of the hydrogen generator 3. As another alternative example, the drain outlet 20 and the partition wall 16 may be provided at the water tank 6 such that the water pressure difference corresponding to the height H of the lower end of the drain outlet 20 from the upper end of the partition wall 16 is less than a lower one of the withstand pressure of the fuel cell 2 and the withstand pressure of the hydrogen generator 3.

As another further alternative example, the drain outlet 20 and the partition wall 16 may be provided at the water tank 6 such that the water pressure difference corresponding to the height H of the lower end of the drain outlet 20 from the upper end of the partition wall 16 is less than at least one of the shutoff pressure of the raw material supply device 4 and the shutoff pressure of the oxidizing gas supply device 10. In this case, it is preferred that the drain outlet 20 and the partition wall 16 are provided at the water tank 6 such that the water pressure difference corresponding to the height H of the lower end of the drain outlet 20 from the upper end of the partition wall 16 is less than a lower one of the shutoff pressure of the raw material supply device 4 and the shutoff pressure of the oxidizing gas supply device 10. More preferably, the drain outlet 20 and the partition wall 16 are provided at the water tank 6 such that the water pressure difference corresponding to the height H of the lower end of the drain outlet 20 from the upper end of the partition wall 16 is less than the lowest one of the following pressures: the withstand pressure of the fuel cell 2; the withstand pressure of the hydrogen generator 3; the shutoff pressure of the raw material supply device 4; and the shutoff pressure of the oxidizing gas supply device 10. It should be noted that Embodiment 1 employs a configuration in which the drain outlet 20 and the partition wall 16 are provided at the water tank 6 such that the water pressure difference corresponding to the height H of the lower end of the drain outlet 20 from the upper end of the partition wall 16 is less than the lowest one of the following pressures: the withstand pressure of the fuel cell 2; the withstand pressure of the hydrogen generator 3; the shutoff pressure of the raw material supply device 4; and the shutoff pressure of the oxidizing gas supply device 10.

Accordingly, in a case where at least one of the downstream passage of the flue gas passage 8, which is downstream from the water tank 6, and the second oxidizing exhaust gas passage 12b is blocked, the oxidizing exhaust gas flowing through the first oxidizing exhaust gas passage 12a of the oxidizing exhaust gas passage 12 and the flue gas flowing through the flue gas passage 8 are discharged to the atmosphere through the drain outlet 20 of the water tank 6. It should be noted that pipes having a sufficiently large diameter are used for the flue gas passage 8, the first oxidizing exhaust gas passage 12a, and the second oxidizing exhaust gas passage 12b for the purpose of preventing pressure loss from becoming significant.

### [Operation of Fuel Cell System]

Next, operations of the fuel cell system 1 according to Embodiment 1 are described with reference to Fig. 1. Described below is a case where at least one of the downstream passage of the flue gas passage 8, which is downstream from the water tank 6, and the second oxidizing exhaust gas passage 12b is not sealed

First, a raw material such as a natural gas, LPQ, or the like is supplied to the hydrogen generator 3 from the raw material supply device 4. In the hydrogen generator 3, the supplied raw material is subjected to steam reforming under a water-vapor atmosphere, and thereby a hydrogen-rich fuel gas is generated. The generated fuel gas is supplied to the anode 72A of the fuel cell 2. Further, the oxidizing gas supply device 10 supplies air as an oxidizing gas to the cathode 72B of the fuel cell 2.

In the fuel cell 2, a reaction occurs between the fuel gas and the oxidizing gas, which are supplied in the above-described manner. As a result, electric power and heat are generated. The generated heat is recovered by cooling water flowing through the fuel cell 2 (not shown).

Of the fuel gas, the gas discharged from the fuel cell 2 without being used in the reaction, that is, unreacted fuel gas, is supplied to the combustor 3a of the hydrogen generator 3 and used for combustion. Owing to the combustion heat generated at the combustor 3a, the reformer and other components of the hydrogen generator 3 are heated (not shown). Accordingly, the steam reforming reaction at the hydrogen generator 3 can be performed with the temperature of the reformer kept at a predetermined temperature.

Then, the flue gas generated at the combustor 3a is discharged to the flue gas passage 8. The heat of the flue gas discharged to the flue gas passage 8 is, at the flue gas heat exchanger 5, recovered by the water that flows through the hot water circulation passage 15. As a result, the flue gas is cooled down to a dew-point temperature or lower, and thereby moisture within the flue gas is condensed to water. The water flows through the flue gas condensed water passage 9, and is then stored into the water tank 6. It should be noted that gas components of the flue gas flow through the flue gas passage 8, and are then discharged to the outside of the fuel cell system 1 through the air outlet 7.

Of the oxidizing exhaust gas, the gas discharged from the fuel cell 2 without being used in the reaction, that is, unreacted oxidizing exhaust gas, flows through the oxidizing exhaust gas passage 12 (to be exact, the first oxidizing exhaust gas passage 12a), and is thereby sent to the oxidizing exhaust gas heat exchanger 11. At the oxidizing exhaust gas heat exchanger 11, the heat of the oxidizing exhaust gas is recovered by the water that flows through the hot water circulation passage 15. As a result, the oxidizing exhaust gas is cooled down to a dew-point temperature or lower, and thereby moisture within the oxidizing exhaust gas is condensed to water. The water flows through the first oxidizing exhaust gas passage 12a, and is then stored into the water tank 6. Gas components of the oxidizing exhaust gas flow through the second oxidizing exhaust gas passage 12b, and are then discharged to the outside of the fuel cell system 1 through the air outlet 7.

### [Operational Advantages of Fuel Cell System]

Next, operational advantages of the fuel cell system 1 according to Embodiment 1 are described with reference to Fig. 1 and Fig. 4B to Fig. 4D.

Assume a case where, as shown in Fig. 4B to Fig. 4D, at least one of the downstream passage of the flue gas passage 8, which is downstream from the water tank 6, and the second oxidizing exhaust gas passage 12b becomes blocked during the operation of the fuel cell system 1 (each of Fig. 4B to Fig. 4D shows a state where the air outlet 7 is blocked). If the air outlet 7 is gradually blocked, the pressure loss of the flue gas and the pressure loss of the oxidizing exhaust gas are increased at the air outlet 7, accordingly. This causes an increase in the pressure within the flue gas passage 8 and the second oxidizing exhaust gas passage 12b, resulting in an increase in the pressure within the first reservoir 17 of the water tank 6.

As shown in Fig. 4B, the water level of the first reservoir 17 of the water tank 6 decreases in accordance with the increase in the pressure within the first reservoir 17. On the other hand, the water level of the second reservoir 18 increases by an amount that corresponds to the decrease in the water level of the first reservoir 17. As shown in Fig. 4C, if the water level of the second reservoir 18 exceeds the height of the drain outlet 20, then the water within the water tank 6 flows into the drainage passage 31 through the drain outlet 20, and is thereby discharged to the outside of the fuel cell system 1.

If the air outlet 7 is further blocked as shown in Fig. 4D, then the pressure loss of the flue gas and the pressure loss of the oxidizing exhaust gas at the air outlet 7 are further increased. Accordingly, the pressure of the first reservoir 17 is further increased, and as a result, the water level of the first reservoir 17 of the water tank 6 is further reduced. If the water level of the first reservoir 17 becomes below the partition wall 16, the gas within the first reservoir 17 (which contains air, the oxidizing exhaust gas, and the flue gas) enters the second reservoir 18. The gas having entered the second reservoir 18 flows into the drainage passage 31 from the second reservoir 18 through the drain outlet 20, and is then discharged to the outside of the fuel cell system 1 (i.e., to the atmosphere). This prevents a situation where the pressure within the first reservoir 17 of the water tank 6 reaches a lower one of the withstand pressure of the fuel cell 2 and the withstand pressure of the hydrogen generator 3.

As described above, even if at least one of the downstream passage of the flue gas passage 8, which is downstream from the water tank 6, and the second oxidizing exhaust gas passage 12b is blocked, the fuel cell system 1 according to Embodiment 1 prevents the pressure within the first reservoir 17 from reaching the lowest one of the following pressures: the withstand pressure of the fuel cell 2; the withstand pressure of the hydrogen generator 3; the shutoff pressure of the raw material supply device 4; and the shutoff pressure of the oxidizing gas supply device 10. Accordingly, damage to the fuel cell 2, the hydrogen generator 3, the raw material supply device 4, and the oxidizing gas supply device 10 can be prevented.

Although in Embodiment 1 the oxidizing exhaust gas passage 12, the flue gas passage 8, and the flue gas condensed water passage 9 form the exhaust gas passage, the present invention is not limited thereto. As an alternative example, the oxidizing exhaust gas passage 12 alone may serve as the exhaust gas passage. As another alternative example, the flue gas passage 8 and the flue gas condensed water passage 9 may form the exhaust gas passage.

Further, in Embodiment 1, in a case where at least one of the downstream passage of the flue gas passage 8, which is downstream from the water tank 6, and the second oxidizing exhaust gas passage 12b is blocked, the operation of the fuel cell system 1 may be continued, or alternatively, the operation of the fuel cell system 1 may be stopped as described below in Embodiment 2.

### [Variation 1]

Next, variations of the fuel cell system 1 according to Embodiment 1 are described.

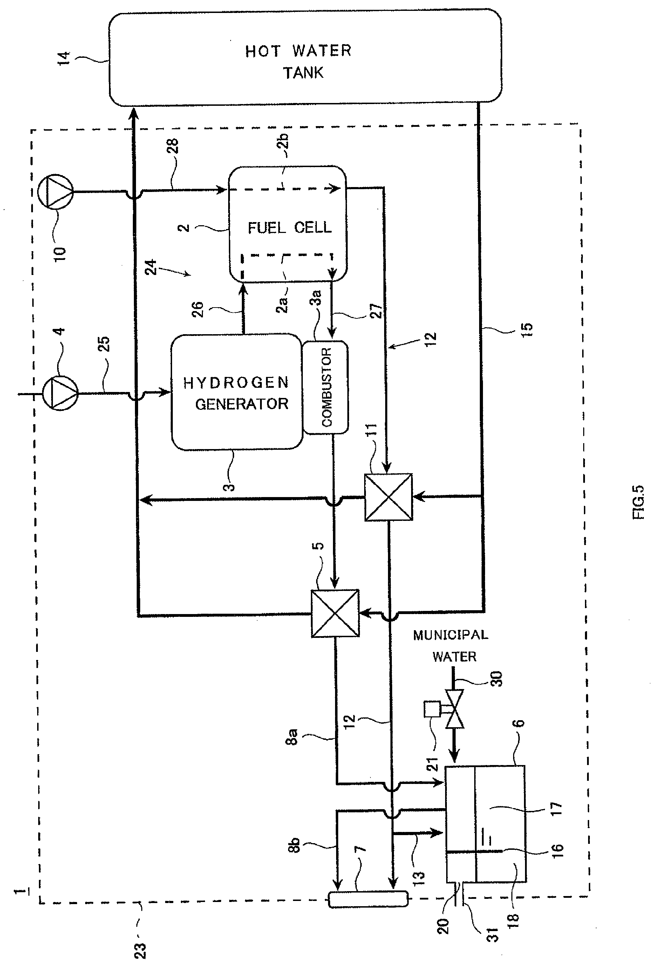

Fig. 5 is a schematic diagram showing a schematic configuration of a fuel cell system according to Variation 1 of Embodiment 1.

As shown in Fig. 5, the fundamental configuration of a fuel cell system 1 according to Variation 1 of Embodiment 1 is the same as that of the above-described fuel cell system 1 according to Embodiment 1. However, the fuel cell system 1 according to Variation 1 is different from the above-described fuel cell system 1 according to Embodiment 1, regarding the configuration of the exhaust gas passage (i.e., the flue gas passage 8 and the oxidizing exhaust gas passage 12). Specifically, in the fuel cell system 1 according to Variation 1, the flue gas passage 8 includes a first flue gas passage (first passage) 8a and a second flue gas passage (second passage) 8b. The first flue gas passage 8a connects the combustor 3a of the hydrogen generator 3 and the first reservoir 17 of the water tank 6. The second flue gas passage 8b connects the first reservoir 17 of the water tank 6 and the air outlet 7.

The oxidizing exhaust gas passage (third passage) 12 connects the internal oxidizing gas channel 2b of the fuel cell 2 and the air outlet 7. The upstream end of an oxidizing exhaust gas condensed water passage (fourth passage) 13 is connected to a downstream passage of the oxidizing exhaust gas passage 12, which is downstream from the oxidizing exhaust gas heat exchanger 11. The downstream end of the oxidizing exhaust gas condensed water passage 13 is connected to the first reservoir 17 of the water tank 6.

The fuel cell system 1 according to Variation 1, having the above configuration, provides the same operational advantages as those of the fuel cell system 1 according to Embodiment 1.

### [Variation 2]

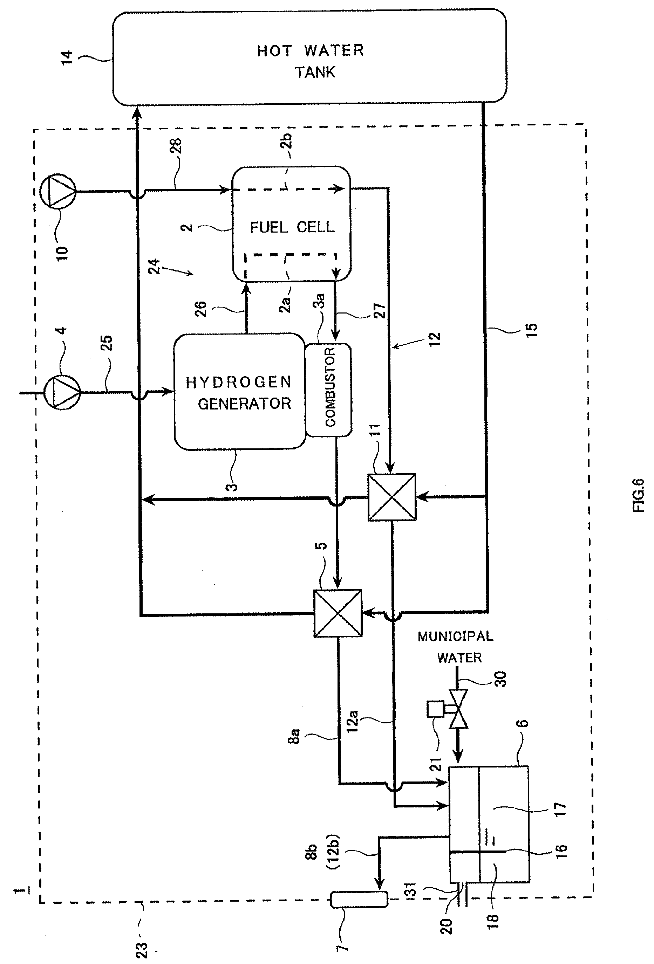

Fig. 6 is a schematic diagram showing a schematic configuration of a fuel cell system according to Variation 2 of Embodiment 1.

As shown in Fig. 6, the fundamental configuration of a fuel cell system 1 according to Variation 2 of Embodiment 1 is the same as that of the above-described fuel cell system 1 according to Embodiment 1. However, the fuel cell system 1 according to Variation 2 is different from the above-described fuel cell system 1 according to Embodiment 1, regarding the configuration of the flue gas passage 8. Specifically, in the fuel cell system 1 according to Variation 2, the flue gas passage 8 includes the first flue gas passage (first passage) 8a and the second flue gas passage (second passage) 8b. The first flue gas passage 8a connects the combustor 3a of the hydrogen generator 3 and the first reservoir 17 of the water tank 6. The second flue gas passage 8b connects the first reservoir 17 of the water tank 6 and the air outlet 7. In Variation 2, piping that forms the second flue gas passage 8b also serves as the second oxidizing exhaust gas passage 12b.

The fuel cell system 1 according to Variation 2, having the above configuration, provides the same operational advantages as those of the above-described fuel cell system 1 according to Embodiment 1. Although in Variation 2 the second flue gas passage 8b also serves as the second oxidizing exhaust gas passage 12b, the present invention is not limited thereto. The second flue gas passage 8b and the second oxidizing exhaust gas passage 12b may be provided in the form of separate passages.

### [Variation 3]

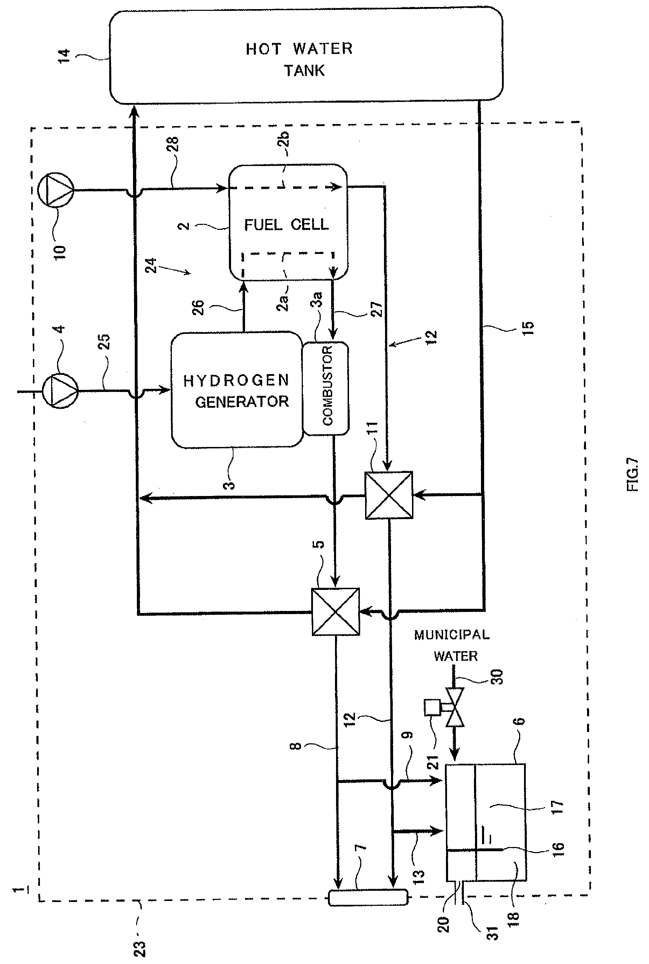

Fig. 7 is a schematic diagram showing a schematic configuration of a fuel cell system according to Variation 3 of Embodiment 1.

As shown in Fig. 7, the fundamental configuration of a fuel cell system 1 according to Variation 3 of Embodiment 1 is the same as that of the above-described fuel cell system 1 according to Embodiment 1. However, the fuel cell system 1 according to Variation 3 is different from the above-described fuel cell system 1 according to Embodiment 1, regarding the configuration of the oxidizing exhaust gas passage 12. Specifically, in the fuel cell system 1 according to Variation 3, the oxidizing exhaust gas passage (third passage) 12 connects the internal oxidizing gas channel 2b of the fuel cell 2 and the air outlet 7. The upstream end of the oxidizing exhaust gas condensed water passage (fourth passage) 13 is connected to the downstream passage of the oxidizing exhaust gas passage 12, which is downstream from the oxidizing exhaust gas heat exchanger 11. The downstream end of the oxidizing exhaust gas condensed water passage 13 is connected to the first reservoir 17 of the water tank 6.

The fuel cell system 1 according to Variation 3, having the above configuration, provides the same operational advantages as those of the fuel cell system 1 according to Embodiment 1.

### [Variation 4]

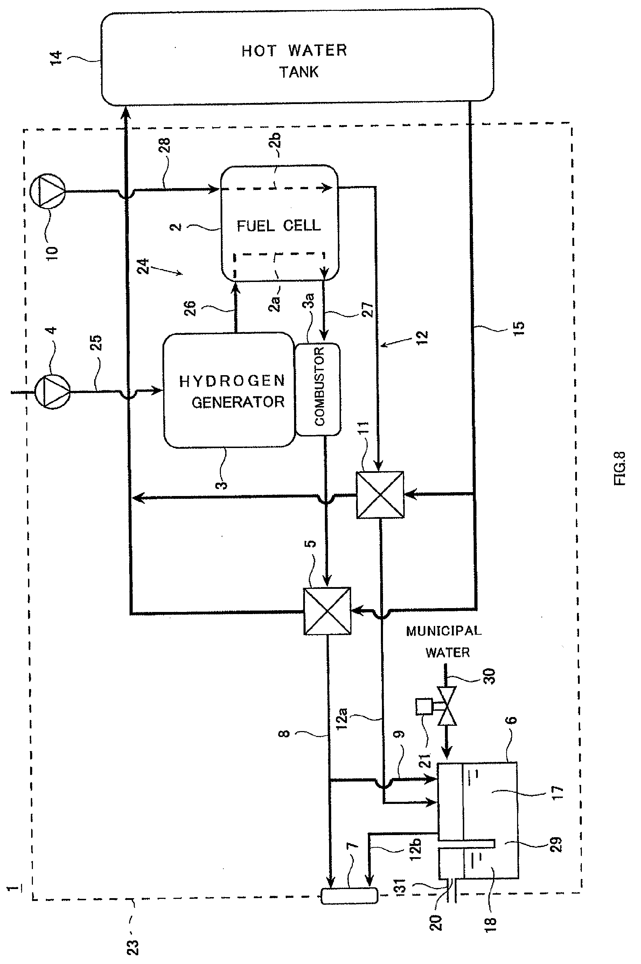

Fig. 8 is a schematic diagram showing a schematic configuration of a fuel cell system according to Variation 4 of Embodiment 1.

As shown in Fig. 8, the fundamental configuration of a fuel cell system 1 according to Variation 4 of Embodiment 1 is the same as that of the above-described fuel cell system 1 according to Embodiment 1. However, the fuel cell system 1 according to Variation 4 is different from the above-described fuel cell system 1 according to Embodiment 1, regarding the configuration of the water tank 6. Specifically, in the fuel cell system 1 according to Variation 4, the first reservoir 17 and the second reservoir 18 are formed as separate tanks (i.e., as separate casings), and the communication part 29 is provided in a manner to allow a lower part of the first reservoir 17 and a lower part of the second reservoir 18 to communicate with each other.

The fuel cell system 1 according to Variation 4, having the above configuration, provides the same operational advantages as those of the fuel cell system 1 according to Embodiment 1.

### (Embodiment 2)

A fuel cell system according to Embodiment 2 of the present invention further includes: a controller; and a water level detector provided at the first reservoir of the water tank and configured to detect the water level of the first reservoir. The fuel cell system according to Embodiment 2 serves as an example where the controller is configured to stop the fuel cell apparatus from operating if the water level detector detects, in the water tank, a first water level which allows an exhaust gas to be discharged to the atmosphere through the drain outlet of the water tank.

### [Configuration of Fuel Cell System]

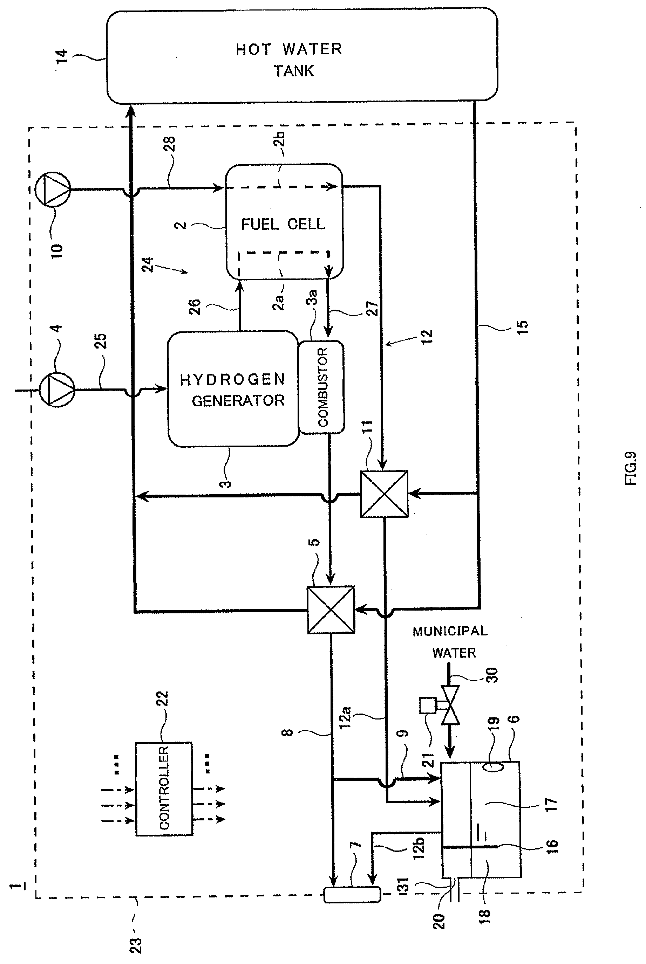

Fig. 9 is a schematic diagram showing a schematic configuration of the fuel cell system according to Embodiment 2 of the present invention.

As shown in Fig. 9, the fundamental configuration of a fuel cell system 1 according to Embodiment 2 of the present invention is the same as that of the fuel cell system 1 according to Embodiment 1. However, Embodiment 2 is different from Embodiment 1 in that the fuel cell system 1 according to Embodiment 2 is provided with a water level detector 19 and a controller 22. To be specific, the water level detector 19 is provided in the first reservoir 17 of the water tank 6.

The water level detector 19 may be configured in any form, so long as the water level detector 19 is configured to detect the water level within the first reservoir 17 and to output the detected water level to the controller 22. Examples of the water level detector 19 include a float-type water level sensor, an optical interface water level sensor, an ultrasonic water level sensor, an electrode-type water level sensor, and a pressure-type water level sensor.

The controller 22 may be configured in any form, so long as the controller 22 is configured as a device for controlling the devices included in the fuel cell system 1. For example, the controller 22 includes: a microprocessor; an arithmetic processing unit exemplified by, for example, a CPU; and a storage unit configured as a memory or the like which stores a program for performing control operations. Through loading and execution, by the arithmetic processing unit, of a predetermined control program stored in the storage unit, the controller 22 performs various controls over the Fuel cell system 1.

It should be noted that the controller 22 may be configured not only as a single controller, but as a group of multiple controllers which operate in cooperation with each other to control the fuel cell system 1. Moreover, the controller 22 may be configured as a microcontroller. Furthermore, the controller 22 may be configured as an MPU, PLC (programmable logic controller), logic circuit, or the like.

Based on the water level of the first reservoir 17, which is detected by the water level detector 19, the controller 22 controls the fuel cell system 1. To be specific, when the water level detector 19 detects the first water level, the controller 22 stops the fuel cell apparatus 24 (fuel cell system 1) from operating. Here, the first water level is a water level to which the water in the water tank 6 may be reduced when at least one of the downstream passage of the flue gas passage 8, which is downstream from the water tank 6, and the second oxidizing exhaust gas passage 12b is blocked. When the water in the water tank 6 is reduced to the first water level, the exhaust gas is discharged to the atmosphere through the drain outlet 20 of the water tank 6.

For example, in a case where the withstand pressure of the fuel cell 2 is A kPa, damage to the fuel cell 2 is prevented if the exhaust gas is discharged through the drain outlet 20 at a time when the water level of the first reservoir 17 is lower than the drain outlet 20 by A × 102 mm. Therefore, it is preferred that the controller 22 stops the fuel cell system 1 from operating if the water level detector 19 detects a water level that is lower than the drain outlet 20 by A × 102 mm or greater. Accordingly, the first water level may be set to any level, so long as the set water level is lower than the drain outlet 20 by at least A × 102 mm and the set water level is, at lowest, the bottom of the water tank 6.

The fuel cell system 1 according to Embodiment 2, having the above configuration, provides the same operational advantages as those of the fuel cell system 1 according to Embodiment 1.

In the fuel cell system 1 according to Embodiment 2, the controller 22 is configured to stop the fuel cell system 1 from operating if the water level detector 19 detects the first water level. Accordingly, even if at least one of the downstream passage of the flue gas passage 8, which is downstream from the water tank 6, and the second oxidizing exhaust gas passage 12b is blocked, a situation where the fuel cell 2 is subjected to.a pressure reaching its withstand pressure is prevented. Thus, in the fuel cell system 1 according to Embodiment 2, damage to the fuel cell 2 can be sufficiently prevented.

Although in Embodiment 2 the first water level is specified based on the withstand pressure of the fuel cell 2, the present invention is not limited thereto. For example, the first water level may be specified based on the withstand pressure of the hydrogen generator 3, or based on the shutoff pressure of the raw material supply device 4, or based on the shutoff pressure of the oxidizing gas supply device 10. Alternatively, the first water level may be specified based on the lowest one of the following pressures: the withstand pressure of the fuel cell 2; the withstand pressure of the hydrogen generator 3; the shutoff pressure of the raw material supply device 4; and the shutoff pressure of the oxidizing gas supply device 10.

### (Embodiment 3)

A fuel cell system according to Embodiment 3 of the present invention includes: a controller; a water level detector provided at the first reservoir of the water tank and configured to detect the water level of the first reservoir; and a water supply device configured to supply water to the first reservoir of the water tank. The fuel cell system according to Embodiment 3 serves as an example, in which the controller is configured to control the water supply device to supply water to the first reservoir of the water tank if the water level detector detects a second water level higher than the first water level, the first water level allowing the exhaust gas to be discharged to the atmosphere through the drain outlet of the water tank, and lower than the high water level of the first reservoir, and the controller is configured to stop the fuel cell apparatus from operating if the water level detector detects the first water level after a predetermined period has elapsed since the supply of water by the water supply device to the first reservoir.

### [Operations of Fuel Cell System]

Since a fuel cell system 1 according to Embodiment 3 of the present invention has the same configuration as that of the fuel cell system 1 according to Embodiment 2, a detailed description thereof will be omitted. Since a power-generating operation by the fuel cell system 1 according to Embodiment 3 is a general power-generating operation performed by publicly-known fuel cell systems, a detailed description thereof will be omitted.

In the fuel cell system 1, there are cases, for example, where water obtained from the condensation at the flue gas heat exchanger 5 and the condensation at the oxidizing exhaust gas heat exchanger 11 is insufficient, and therefore, a part of the water stored in the water tank 6 is supplied to another tank to compensate for the shortfall. In such a case, the water stored in the water tank 6 is reduced, and the water level of the first reservoir 17 is lowered. That is, there are cases where the water level of the first reservoir 17 is lowered, regardless of whether or not at least one of the downstream passage of the flue gas passage 8, which is downstream from the water tank 6, and the second oxidizing exhaust gas passage 12b is blocked.

Accordingly, in Embodiment 3, the controller 22 is configured to determine whether such a lowered water level of the first reservoir 17 has been caused due to a blocked passage or due to a different reason such as the use of water stored in the water tank 6, and to stop the fuel cell apparatus 24 (the fuel cell system 1) from operating if the lowered water level of the first reservoir 17 has been caused due to a blocked passage. Hereinafter, a description is given of controls that the controller 22 performs in accordance with the water level of the first reservoir 17, which is detected by the water level detector 19.

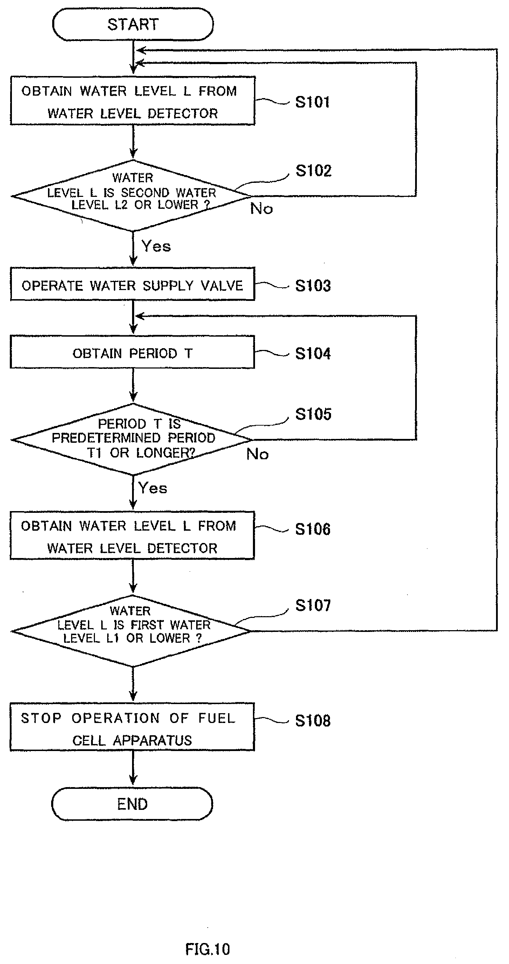

Fig. 10 is a flowchart schematically showing a water level determination operation performed by the fuel cell system according to Embodiment 3 of the present invention. It should be noted that the operation below is, in principle, performed during a power-generating operation by the fuel cell system 1.

As shown in Fig. 10, first, the controller 22 obtains a water level L of the first reservoir 17 from the water level detector 19 (step S101). Then, the controller 22 determines whether the water level L obtained in step S101 is the second water level or lower (step S102). The second water level herein refers to a water level higher than the first water level and lower than the high water level of the water tank 6. The second water level may be set to any water level, so long as it is higher than the first water level and lower than the high water level of the water tank 6.

If the water level L obtained in step S101 is higher than the second water level (No in step S102), then the controller 22 returns to step S101 and repeats step S101 and step S102 until the water level L obtained in step S101 becomes the second water level or lower. On the other hand, if the water level L obtained in step S101 is the second water level or lower (Yes in step S102), the controller 22 advances to step S103.

In step S103, the controller 22 operates the water supply valve 21 to supply municipal water to the water tank 6. It should be noted that the municipal water is supplied to the water tank 6, such that the water level of the first reservoir 17 becomes higher than the second water level but no higher than the high water level of the water tank 6.

Next, the controller 22 obtains a period T which has elapsed after the start of the operation of the water supply valve 21 (step S104), and determines whether the period T obtained in step S104 is a predetermined period T1 or longer (step S105). The predetermined period T1 herein is a time period which is set in advance through, for example, an experiment.

For example, the predetermined period T1 may be a period required for the gases present in the first oxidizing exhaust gas passage 12a and the flue gas passage 8 to be discharged through the drain outlet 20 in a case where at least one of the downstream passage of the flue gas passage 8, which is downstream from the water tank 6, and the second oxidizing exhaust gas passage 12b is blocked and the same pressure as the withstand pressure of the fuel cell 2 is applied to the first reservoir 17.

As an alternative example, the predetermined period T1 may be a period required for the gases present in the first oxidizing exhaust gas passage 12a and the flue gas passage 8 to be discharged through the drain outlet 20 in a case where at least one of the downstream passage of the flue gas passage 8, which is downstream from the water tank 6, and the second oxidizing exhaust gas passage 12b is blocked and the lowest one of the following pressures is applied to the first reservoir 17: the withstand pressure of the fuel cell 2; the withstand pressure of the hydrogen generator 3; the shutoff pressure of the raw material supply device 4; and the shutoff pressure of the oxidizing gas supply device 10.

If the period T obtained in step S104 is shorter than the predetermined period T1 (No in step S105), the controller 22 returns to step S104 and repeats step S104 and step S105 until the period T obtained in step S104 becomes the predetermined period T1. On the other hand, if the period T obtained in step S104 is the predetermined period T1 or longer (Yes in step S 105), the controller 22 advances to step S106.

In step S106, the controller 22 obtains the water level L of the first reservoir 17 again from the water level detector 19. Then, the controller 22 determines whether the water level L obtained in step S106 is the first water level or lower (step S107).

If the water level L obtained in step S106 is higher than the first water level, it can be determined that the water level of the first reservoir 17 has been lowered due to consumption (supply) of water from the water tank 6. On the other hand, if the water level L obtained in step S106 is the first water level or lower, it can be determined that the water level of the first reservoir 17 has been lowered since the water has been discharged from the first reservoir 17 through the drain outlet 20 for the reason that at least one of the downstream passage of the flue gas passage 8, which is downstream from the water tank 6, and the second oxidizing exhaust gas passage 12b is blocked.

Accordingly, if the water level L obtained in step S106 is higher than the first water level (No in step S107), the controller 22 returns to step S101 to repeat the execution of the program. On the other hand, if the water level L obtained in step S106 is the first water level or lower (Yes in step S107), the controller 22 stops the fuel cell apparatus 24 (fuel cell system 1) from operating (step S108), and ends the execution of the program.

The fuel cell system 1 according to Embodiment 3, having the above configuration, provides the same operational advantages as those of the fuel cell system 1 according to Embodiment 2. Moreover, in the fuel cell system 1 according to Embodiment 3, the controller 22 detennines whether the cause of a lowered water level of the first reservoir 17 is a blockage of at least one of the downstream passage of the flue gas passage 8, which is downstream from the water tank 6, and the second oxidizing exhaust gas passage 12b. Accordingly, the operation of the fuel cell apparatus 24 can be stopped more appropriately. Thus, the fuel cell system 1 according to Embodiment 3 realizes improved usability.

### (Embodiment 4)

A fuel cell system according to Embodiment 4 of the present invention includes a controller and a raw material supply device configured to supply a raw material to the fuel cell apparatus of the fuel cell system. The fuel cell system according to Embodiment 4 serves as an example where: the fuel cell apparatus includes a fuel cell; the fuel cell includes an internal fuel gas channel, through which a fuel gas is supplied to an anode, and an internal oxidizing gas channel, through which an oxidizing gas is supplied to a cathode; an exhaust gas passage is connected to the downstream end of the internal fuel gas channel; and the controller is configured to perform feedback control of the raw material supply device, such that the raw material supply device supplies the raw material at a flow rate that is specified in accordance with the amount of power generated by the fuel cell, and to stop the fuel cell apparatus from operating if supply performance of the raw material supply device exceeds first supply performance which is set in advance.

The "first supply performance" herein refers to the supply performance of the raw material supply device, which is a pressure less than a lower one of the withstand pressure of a hydrogen generator of the fuel cell system and the withstand pressure of the fuel cell.

### [Configuration of Fuel Cell System]

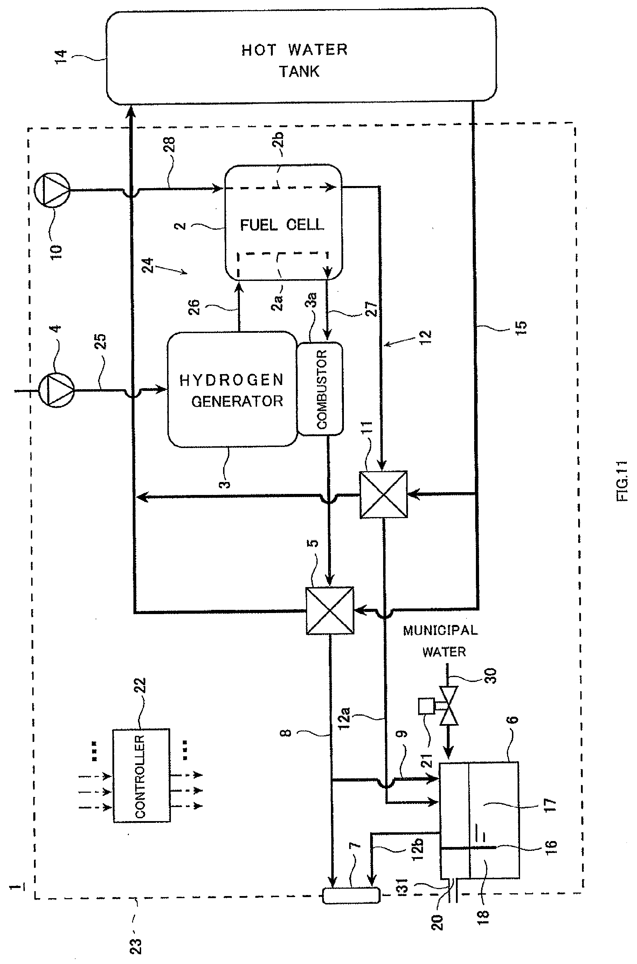

Fig. 11 is a schematic diagram showing a schematic configuration of the fuel cell system according to Embodiment 4 of the present invention.

As shown in Fig. 11, the fundamental configuration of a fuel cell system 1 according to Embodiment 4 of the present invention is the same as that of the fuel cell system 1 according to Embodiment 1. However, Embodiment 4 is different from Embodiment 1 in that the fuel cell system 1 according to Embodiment 4 includes the controller 22. Another difference of the fuel cell system 1 according to Embodiment 4 from the fuel cell system 1 according to Embodiment 1 is that the flue gas passage 8 and the flue gas condensed water passage 9 serve as the exhaust gas passage. Since the controller 22 according to Embodiment 4 has the same configuration as that of the controller 22 previously described in Embodiment 2, a detailed description of the controller 22 is omitted.

### [Operational Advantages of Fuel Cell System]

Next, operational advantages of the fuel cell system 1 according to Embodiment 4 are described.

As described above, the pressure within the first reservoir 17 of the water tank 6 increases if at least one of the downstream passage of the flue gas passage 8, which is downstream from the water tank 6, and the second oxidizing exhaust gas passage 12b is blocked. Since the pressure within, for example, the flue gas passage 8 increases in accordance with an increase in the pressure within the first reservoir 17, the pressure within the raw material supply passage 25 increases, accordingly.

Here, assume a case where the controller 22 performs feedback control of the raw material supply device 4, such that the raw material supply device 4 supplies the raw material at a flow rate that is specified in accordance with the amount of power generated by the fuel cell 2. In this case, even if the amount of power generated by the fuel cell 2 is constant, when the pressure within the raw material supply passage 25 increases, the raw material supply device becomes unable to supply the raw material at the flow rate that is specified in accordance with the amount of power generated by the fuel cell 2 if the supply performance of the raw material supply device 4 is kept constant.

For this reason, the controller 22 controls the raw material supply device 4 to increase its supply performance. Accordingly, depending on the amount of power generated by the fuel cell 2, control the raw material supply device 4 to increase its supply performance until the supply performance, that is, the pressure applied by the raw material supply device 4, reaches or even exceeds the withstand pressure of the fuel cell 2 and/or the hydrogen generator 3.

Therefore, in the above case where the controller 22 of the fuel cell system 1 according to Embodiment 4 performs feedback control of the raw material supply device 4 to supply the raw material at the flow rate that is specified in accordance with the amount of power generated by the fuel cell 2, the controller 22 is configured to stop the fuel cell apparatus 24 (fuel cell system 1) from operating if the supply performance of the raw material supply device 4 exceeds the first supply performance which is set in advance.

To be specific, for example, assume a case where there is a fear of the fuel cell 2 and/or the hydrogen generator 3 being damaged when the supply performance of the raw material supply device 4 reaches 80 % or greater, which is equal to or greater than the withstand pressure of the fuel cell 2 and/or the hydrogen generator 3. In this case, further assume that the first supply performance is set to 70 % which is lower than 80 % by 10 points. Here, if the controller 22 controls the raw material supply device 4 to increase the supply performance of the raw material supply device 4 such that the supply performance exceeds 70 %, then the controller 22 determines that at least one of the downstream passage of the flue gas passage 8, which is downstream from the water tank 6, and the second oxidizing exhaust gas passage 12b is blocked, and stops the fuel cell apparatus 24 from operating, accordingly. In this manner, damage to the fuel cell 2 and/or the hydrogen generator 3 can be prevented.

The fuel cell system 1 according to Embodiment 4, having the above configuration, provides the same operational advantages as those of the fuel cell system 1 according to Embodiment 1. Moreover, in the fuel cell system 1 according to Embodiment 4, if the supply performance of the raw material supply device 4 exceeds the first supply performance, which is set in advance, then the operation of the fuel cell apparatus 24 (the fuel cell system 1) is stopped. In this manner, damage to the fuel cell 2 and/or the hydrogen generator 3 can be prevented more effectively.

In Embodiment 4, the controller 22 performs feedback control of the raw material supply device 4, such that the raw material supply device 4 supplies the raw material at a flow rate that is specified in accordance with the amount of power generated by the fuel cell 2. However, the present invention is not limited thereto. For example, the controller 22 may perform the feedback control by means of a raw material flowmeter which measures the flow rate of the raw material, such that the flow rate of the raw material is kept at a specified flow rate.

### (Embodiment 5)

A fuel cell system according to Embodiment 5 of the present invention includes: a controller; a raw material supply device configured to supply a raw material to the fuel cell apparatus of the fuel cell system, and a raw material flow rate detector configured to detect a flow rate of the raw material which is supplied from the raw material supply device to the fuel cell apparatus. The fuel cell system according to Embodiment 5 serves as an example where: the fuel cell apparatus includes a fuel cell; the fuel cell includes an internal fuel gas channel, through which a fuel gas is supplied to an anode, and an internal oxidizing gas channel, through which an oxidizing gas is supplied to a cathode; an exhaust gas passage is connected to the downstream end of the internal fuel gas channel; and the controller is configured to control the raw material supply device, such that the raw material supply device supplies the raw material with supply perfonnance that is set in advance in accordance with the amount of power generated by the fuel cell, and to stop the fuel cell apparatus from operating if the raw material flow rate detector detects a flow rate lower than a first raw material flow rate which is set in advance.

### [Configuration of Fuel Cell System]

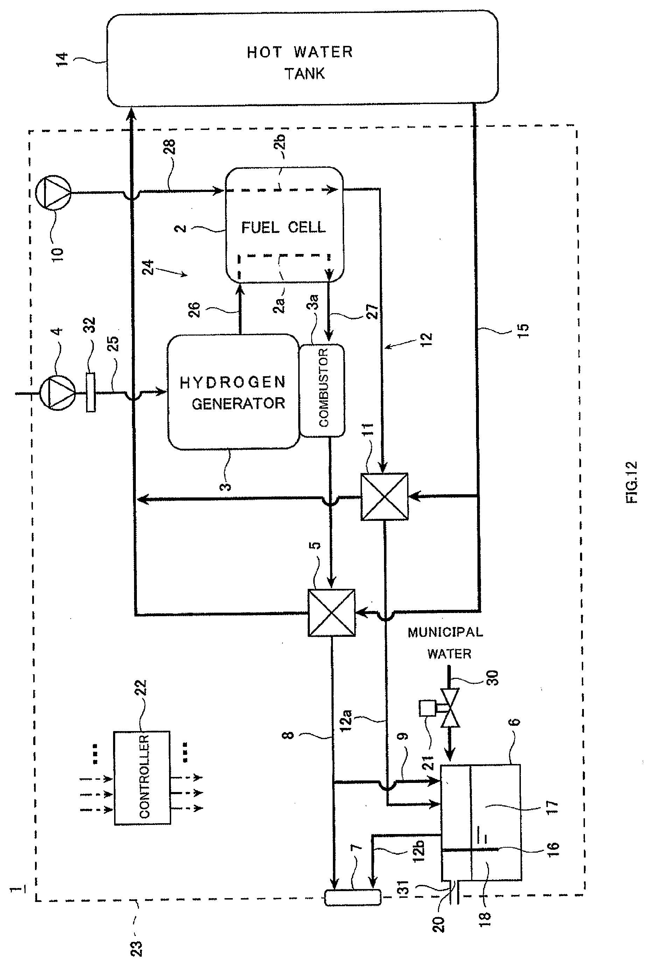

Fig. 12 is a schematic diagram showing a schematic configuration of the fuel cell system according to Embodiment 5 of the present invention.

As shown in Fig. 12, the fundamental configuration of a fuel cell system 1 according to Embodiment 5 of the present invention is the same as that of the fuel cell system 1 according to Embodiment 1. However, Embodiment 5 is different from Embodiment 1 in that the fuel cell system 1 according to Embodiment 5 includes the controller 22 and a raw material flowmeter (raw material flow rate detector) 32. Another difference of the fuel cell system 1 according to Embodiment 5 from the fuel cell system 1 according to Embodiment 1 is that the flue gas passage 8 and the flue gas condensed water passage 9 serve as the exhaust gas passage.

The raw material flowmeter 32 may be configured in any form, so long as the raw material flowmeter 32 is configured to detect the flow rate of the raw material flowing through the raw material supply passage 25. For example, a venturi meter, an orifice flowmeter, or the like can be used as the raw material flowmeter 32. Since the controller 22 according to Embodiment 5 has the same configuration as that of the controller 22 previously described in Embodiment 2, a detailed description of the controller 22 is omitted.

### [Operational Advantages of Fuel Cell System]

Next, operational advantages of the fuel cell system 1 according to Embodiment 5 are described.

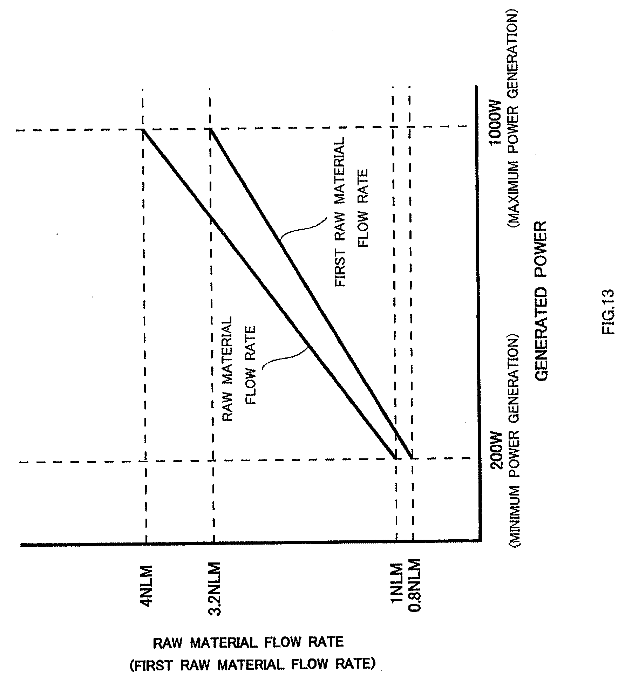

Fig. 13 is a graph showing a relationship between power generated by the fuel cell system according to Embodiment 5 of the present invention and a raw material flow rate, and a relationship between the power generated by the fuel cell system according to Embodiment 5 and the first raw material flow rate.

Assume a case where as shown in Fig. 13, the controller 22 controls the raw material supply device 4, such that the raw material supply device 4 supplies the raw material with supply performance that is set in advance in accordance with the amount of power generated by the fuel cell 2. Specifically, in Embodiment 5, in a case where the fuel cell apparatus 24 generates 200 W of power which is the minimum power generation by the fuel cell apparatus 24, the controller 22 controls the supply performance of the raw material supply device 4, such that the flow rate of the raw material supplied to the fuel cell apparatus 24 (to be exact, the hydrogen generator 3) becomes 1 NLM. In a case where the fuel cell apparatus 24 generates 1000 W of power which is the maximum power generation by the fuel cell apparatus 24, the controller 22 controls the supply performance of the raw material supply device 4, such that the flow rate of the raw material supplied to the fuel cell apparatus 24 (to be exact, the hydrogen generator 3) becomes 4 NLM. Further, the controller 22 controls the supply performance of the raw material supply device 4 such that the flow rate of the raw material supplied to the fuel cell apparatus 24 (to be exact, the hydrogen generator 3) becomes linear with respect to the generated power.

As previously mentioned, the pressure within the first reservoir 17 of the water tank 6 increases in a case where at least one of the downstream passage of the flue gas passage 8, which is downstream from the water tank 6, and the second oxidizing exhaust gas passage 12b is blocked. Since the pressure within, for example, the flue gas passage 8 increases in accordance with the increase in the pressure within the first reservoir 17, the pressure within the raw material supply passage 25 increases, accordingly. Therefore, in this case, even if the controller 22 controls the supply performance of the raw material supply device 4 such that the raw material flow rate becomes, for example, 1 NLM, the raw material flow rate detected by the raw material flowmeter 32 is less than 1 NLM.

In view of the above, in the case where the controller 22 of the fuel cell system 1 according to Embodiment 5 controls the raw material supply device 4 to supply the raw material with supply performance that is set in advance in accordance with the amount of power generated by the fuel cell 2, the controller 22 is configured to stop the fuel cell apparatus 24 (the fuel cell system 1) from operating if the raw material flowmeter 32 detects a flow rate lower than the first raw material flow rate which is set in advance. The first raw material flow rate herein is a flow rate which is set in advance in consideration of, for example, the configuration of the fuel cell system 1.

Specifically, for example, the first raw material flow rate is as shown in Fig. 13, and is set in a manner described below for the purpose of suppressing degradation of the fuel cell 2 that is caused by an increase in fuel utilization. That is, in a case where the fuel cell apparatus 24 generates 200 W of power which is the minimum power generation by the fuel cell apparatus 24, the first raw material flow rate is set to 0.8 NLM at which the fuel utilization is 90 %. In a case where the fuel cell apparatus 24 generates 1000 W of power which is the maximum power generation by the fuel cell apparatus 24, the first raw material flow rate is set to 3.2 NLM at which the fuel utilization is 90 %. Moreover, the first raw material flow rate is set such that the first raw material flow rate is linear with respect to the generated power.

For example, in the case of controlling the fuel cell apparatus 24 to generate 200 W of power, if a raw material flow rate detected by the raw material flowmeter 32 is lower than 0.8 NLM which is the first raw material flow rate, then the controller 22 determines that at least one of the downstream passage of the flue gas passage 8, which is downstream from the water tank 6, and the second oxidizing exhaust gas passage 12b is blocked, and stops the fuel cell apparatus 24 from operating. In this manner, damage to the fuel cell 2 and/or the hydrogen generator 3 can be prevented.

The fuel cell system 1 according to Embodiment 5, having the above configuration, provides the same operational advantages as those of the fuel cell system 1 according to Embodiment 1. Moreover, in the fuel cell system 1 according to Embodiment 5, if a raw material flow rate detected by the raw material flowmeter 32 is lower than the first raw material flow rate, the operation of the fuel cell apparatus 24 (the fuel cell system 1) is stopped. In this manner, damage to the fuel cell 2 and/or the hydrogen generator 3 can be prevented more effectively.

### (Embodiment 6)

A fuel cell system according to Embodiment 6 of the present invention includes a controller and an oxidizing gas supply device configured to supply an oxidizing gas to the fuel cell apparatus of the fuel cell system. The fuel cell system according to Embodiment 6 serves as an example where: the fuel cell apparatus includes a fuel cell; the fuel cell includes an internal fuel gas channel, through which a fuel gas is supplied to an anode, and an internal oxidizing gas channel, through which the oxidizing gas is supplied to a cathode; an exhaust gas passage is connected to the downstream end of the internal oxidizing gas channel; and the controller is configured to perform feedback control of the oxidizing gas supply device such that the oxidizing gas supply device supplies the oxidizing gas at a flow rate that is specified in accordance with the amount of power generated by the fuel cell, and to stop the fuel cell apparatus from operating if supply performance of the oxidizing gas supply device exceeds second supply performance which is set in advance.

The "second supply performance" herein refers to the supply performance of the oxidizing gas supply device, which is a pressure less than a lower one of the withstand pressure of a hydrogen generator of the fuel cell system and the withstand pressure of the fuel cell.

### [Configuration of Fuel Cell System]

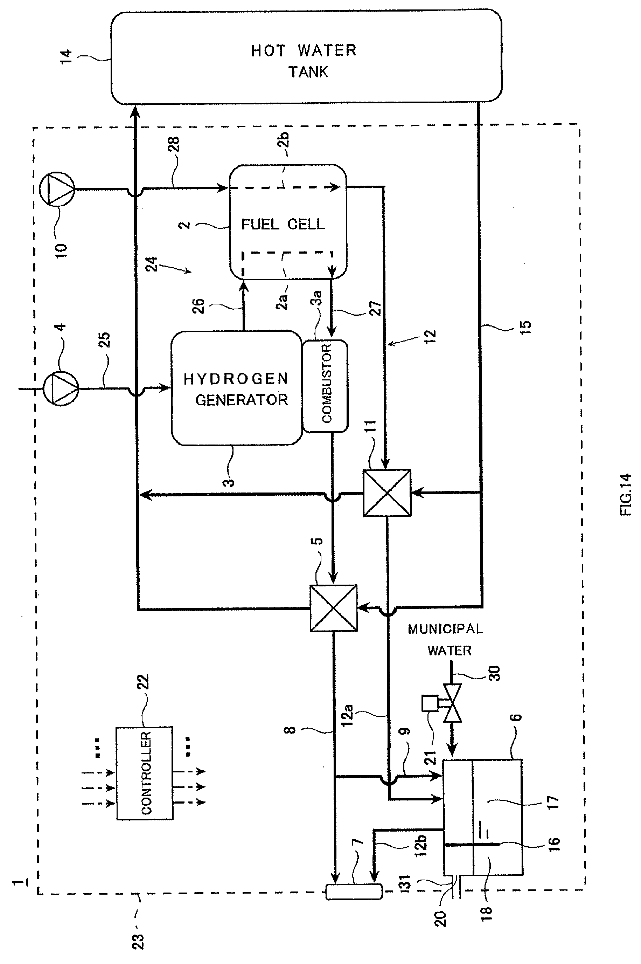

Fig. 14 is a schematic diagram showing a schematic configuration of the fuel cell system according to Embodiment 6 of the present invention.

As shown in Fig. 14, the fundamental configuration of a fuel cell system 1 according to Embodiment 46 of the present invention is the same as that of the fuel cell system 1 according to Embodiment 1. However, Embodiment 6 is different from Embodiment 1 in that the fuel cell system 1 according to Embodiment 6 includes the controller 22. Another difference of the fuel cell system 1 according to Embodiment 6 from the fuel cell system 1 according to Embodiment 1 is that the oxidizing exhaust gas passage 12 alone serves as the exhaust gas passage. Since the controller 22 according to Embodiment 6 has the same configuration as that of the controller 22 previously described in Embodiment 2, a detailed description of the controller 22 is omitted.

### [Operational Advantages of Fuel Cell System]

Next, operational advantages of the fuel cell system 1 according to Embodiment 6 are described.

As described above, the pressure within the first reservoir 17 of the water tank 6 increases if at least one of the downstream passage of the flue gas passage 8, which is downstream from the water tank 6, and the second oxidizing exhaust gas passage 12b is blocked. Since the pressure within, for example, the flue gas passage 8 increases in accordance with the increase in the pressure within the first reservoir 17, the pressure within the oxidizing gas supply passage 28 increases, accordingly.

Here, assume a case where the controller 22 performs feedback control of the oxidizing gas supply device 10, such that the oxidizing gas supply device 10 supplies the oxidizing gas at a flow rate that is specified in accordance with the amount of power generated by the fuel cell 2. In this case, even if the amount of power generated by the fuel cell 2 is constant, when the pressure within the oxidizing gas supply passage 28 increases, the oxidizing gas supply device 10 becomes unable to supply the oxidizing gas at the flow rate that is specified in accordance with the amount of power generated by the fuel cell 2 if the supply performance of the oxidizing gas supply device 10 is kept constant.

For this reason, the controller 22 controls the oxidizing gas supply device 10 to increase its supply performance. Accordingly, depending on the amount of power generated by the fuel cell 2, there is a fear that the controller 22 may control the oxidizing gas supply device 10 to increase its supply performance until the supply performance, that is, the pressure applied by the oxidizing gas supply device 10, reaches or even exceeds the withstand pressure of the fuel cell 2 and/or the hydrogen generator 3.

Therefore, in the above case where the controller 22 of the fuel cell system 1 according to Embodiment 6 performs feedback control of the oxidizing gas supply device 10 to supply the oxidizing gas at the flow rate that is specified in accordance with the amount of power generated by the fuel cell 2, the controller 22 is configured to stop the fuel cell apparatus 24 (fuel cell system 1) from operating if the supply performance of the oxidizing gas supply device 10 exceeds the second supply performance which is set in advance.

To be specific, for example, assume a case where there is a fear of the fuel cell 2 and/or the hydrogen generator 3 being damaged when the supply performance of the oxidizing gas supply device 10 reaches 70 % or greater, which is equal to or greater than the withstand pressure of the fuel cell 2 and/or the hydrogen generator 3. In this case, further assume that the second supply performance is set to 65 % which is lower than 70 % by 5 points. Here, if the controller 22 controls the oxidizing gas supply device 10 to increase the supply performance of the oxidizing gas supply device 10 such that the supply performance exceeds 65 %, then the controller 22 determines that at least one of the downstream passage of the flue gas passage 8, which is downstream from the water tank 6, and the second oxidizing exhaust gas passage 12b is blocked, and stops the fuel cell apparatus 24 from operating, accordingly. In this manner, damage to the fuel cell 2 and/or the hydrogen generator 3 can be prevented.

The fuel cell system 1 according to Embodiment 6, having the above configuration, provides the same operational advantages as those of the fuel cell system 1 according to Embodiment 1. Moreover, in the fuel cell system 1 according to Embodiment 6, if the supply performance of the oxidizing gas supply device 10 exceeds the second supply performance, which is set in advance, then the operation of the fuel cell apparatus 24 (the fuel cell system 1) is stopped. In this manner, damage to the fuel cell 2 and/or the hydrogen generator 3 can be prevented more effectively.

In Embodiment 6, the controller 22 performs feedback control of the oxidizing gas supply device 10, such that the oxidizing gas supply device 10 supplies the oxidizing gas at a flow rate that is specified in accordance with the amount of power generated by the fuel cell 2. However, the present invention is not limited thereto. For example, the controller 22 may perform the feedback control by means of an oxidizing gas flowmeter which measures the flow rate of the oxidizing gas, such that the flow rate of the oxidizing gas is kept at a specified flow rate.

### (Embodiment 7)

A fuel cell system according to Embodiment 7 of the present invention includes: a controller; an oxidizing gas supply device configured to supply an oxidizing gas to the fuel cell apparatus of the fuel cell system; and an oxidizing gas flow rate detector configured to detect a flow rate of the oxidizing gas which is supplied from the oxidizing gas supply device to the fuel cell apparatus. The fuel cell system according to Embodiment 7 serves as an example where: the fuel cell apparatus includes a fuel cell; the fuel cell includes an internal fuel gas channel, through which a fuel gas is supplied to an anode, and an internal oxidizing gas channel, through which the oxidizing gas is supplied to a cathode; an exhaust gas passage is connected to the downstream end of the internal oxidizing gas channel; and the controller is configured to control the oxidizing gas supply device, such that the oxidizing gas supply device supplies the oxidizing gas with supply performance that is set in advance in accordance with the amount of power generated by the fuel cell, and to stop the fuel cell apparatus from operating if the oxidizing gas flow rate detector detects a flow rate lower than a first oxidizing gas flow rate which is set in advance.

### [Configuration of Fuel Cell System]

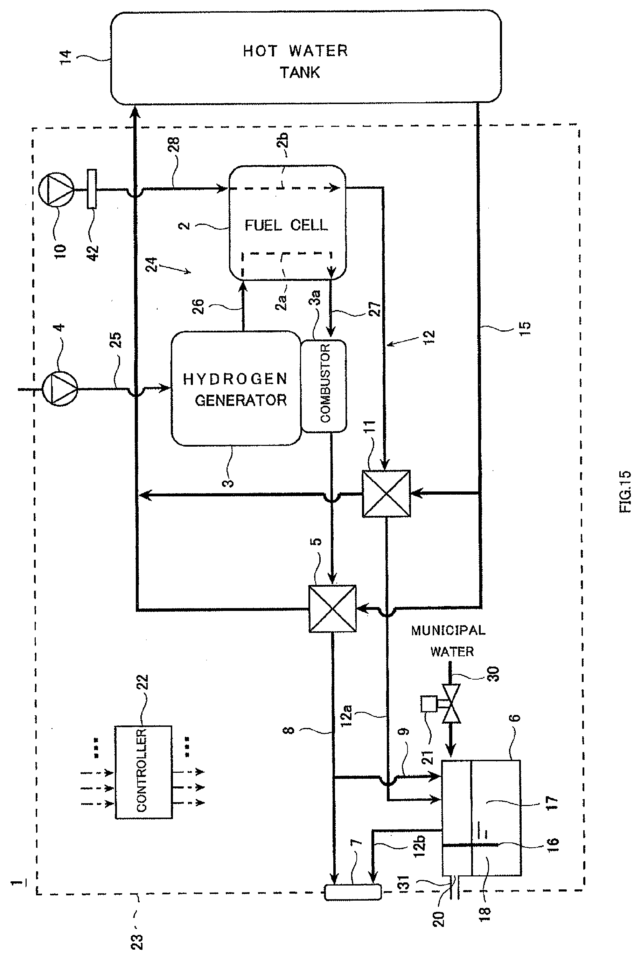

Fig. 15 is a schematic diagram showing a schematic configuration of the fuel cell system according to Embodiment 7 of the present invention.

As shown in Fig. 15, the fundamental configuration of a fuel cell system 1 according to Embodiment 7 of the present invention is the same as that of the fuel cell system 1 according to Embodiment 1. However, Embodiment 7 is different from Embodiment 1 in that the fuel cell system 1 according to Embodiment 7 includes the controller 22 and an aerometer (oxidizing gas flow rate detector) 42. Another difference of the fuel cell system 1 according to Embodiment 7 from the fuel cell system 1 according to Embodiment 1 is that the oxidizing exhaust gas passage 12 alone serves as the exhaust gas passage.

The aerometer 42 may be configured in any form, so long as the aerometer 42 is configured to detect the flow rate of the oxidizing gas flowing through the oxidizing gas supply passage 28. For example, a venturi meter, an orifice flowmeter, or the like can be used as the aerometer 42. Since the controller 22 according to Embodiment 7 has the same configuration as that of the controller 22 previously described in Embodiment 2, a detailed description of the controller 22 is omitted.

### [Operational Advantages of Fuel Cell System]

Next, operational advantages of the fuel cell system 1 according to Embodiment 7 are described.

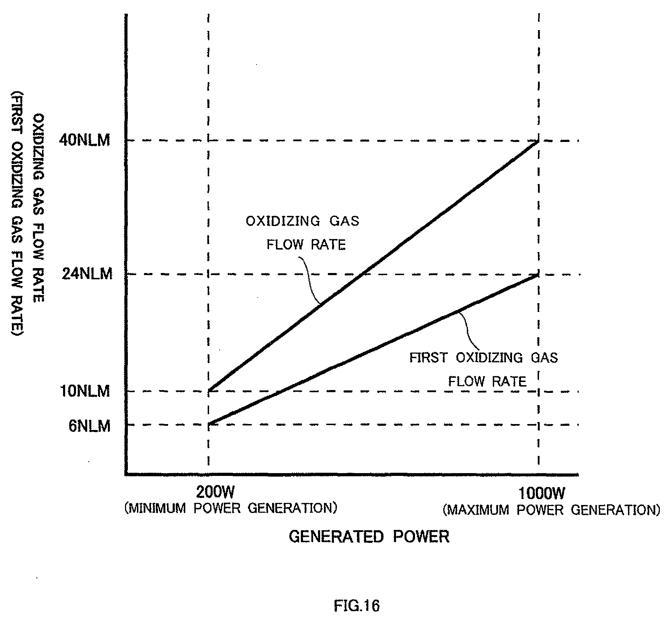

Fig. 16 is a graph showing a relationship between power generated by the fuel cell system according to Embodiment 7 of the present invention and an oxidizing gas flow rate, and a relationship between the power generated by the fuel cell system according to Embodiment 7 and the first oxidizing gas flow rate.

Assume a case where as shown in Fig. 16, the controller 22 controls the oxidizing gas supply device 10, such that the oxidizing gas supply device 10 supplies the oxidizing gas with supply performance that is set in advance in accordance with the amount of power generated by the fuel cell 2. Specifically, in Embodiment 7, in a case where the fuel cell apparatus 24 generates 200 W of power which is the minimum power generation by the fuel cell apparatus 24, the controller 22 controls the supply performance of the oxidizing gas supply device 10, such that the flow rate of the oxidizing gas supplied to the fuel cell apparatus 24 (to be exact, the fuel cell 2) becomes 10 NLM. In a case where the fuel cell apparatus 24 generates 1000 W of power which is the maximum power generation by the fuel cell apparatus 24, the controller 22 controls the supply performance of the oxidizing gas supply device 10, such that the flow rate of the oxidizing gas supplied to the fuel cell apparatus 24 (to be exact, the fuel cell 2) becomes 40 NLM. Further, the controller 22 controls the supply performance of the oxidizing gas supply device 10 such that the flow rate of the oxidizing gas supplied to the fuel cell apparatus 24 (to be exact, the fuel cell 2) becomes linear with respect to the generated power.

As previously mentioned, the pressure within the first reservoir 17 of the water tank 6 increases in a case where at least one of the downstream passage of the flue gas passage 8, which is downstream from the water tank 6, and the second oxidizing exhaust gas passage 12b is blocked. Since the pressure within, for example, the flue gas passage 8 increases in accordance with the increase in the pressure within the first reservoir 17, the pressure within the oxidizing gas supply passage 28 increases, accordingly. Therefore, in this case, even if the controller 22 controls the supply performance of the oxidizing gas supply device 10 such that the oxidizing gas flow rate becomes, for example, 4 NLM, the raw material flow rate detected by the aerometer 42 is less than 4 NLM.

In view of the above, in the case where the controller 22 of the fuel cell system 1 according to Embodiment 7 controls the oxidizing gas supply device 10 to supply the oxidizing gas with supply performance that is set in advance in accordance with the amount of power generated by the fuel cell 2, the controller 22 is configured to stop the fuel cell apparatus 24 (the fuel cell system 1) from operating if the aerometer 42 detects a flow rate lower than the first oxidizing gas flow rate which is set in advance. The first oxidizing gas flow rate herein is a flow rate which is set in advance in consideration of, for example, the configuration of the fuel cell system 1.

Specifically, for example, the first oxidizing gas flow rate is as shown in Fig. 16, and is set in a manner described below for the purpose of suppressing degradation of the fuel cell 2 that is caused by an increase in oxidant utilization. That is, in a case where the fuel cell apparatus 24 generates 200 W of power which is the minimum power generation by the fuel cell apparatus 24, the first oxidizing gas flow rate is set to 6 NLM at which the oxidant utilization is 80 %. In a case where the fuel cell apparatus 24 generates 1000 W of power which is the maximum power generation by the fuel cell apparatus 24, the first oxidizing gas flow rate is set to 24 NLM at which the oxidant utilization is 80 %. Moreover, the first oxidizing gas flow rate is set such that the first oxidizing gas flow rate is linear with respect to the generated power.

For example, in the case of controlling the fuel cell apparatus 24 to generate 200 W of power, if an oxidizing gas flow rate detected by the aerometer 42 is lower than 6 NLM which is the first oxidizing gas flow rate, then the controller 22 determines that at least one of the downstream passage of the flue gas passage 8, which is downstream from the water tank 6, and the second oxidizing exhaust gas passage 12b is blocked, and stops the fuel cell apparatus 24 from operating. In this manner, damage to the fuel cell 2 and/or the hydrogen generator 3 can be prevented.

The fuel cell system 1 according to Embodiment 7, having the above configuration, provides the same operational advantages as those of the fuel cell system 1 according to Embodiment 1. Moreover, in the fuel cell system 1 according to Embodiment 7, if an oxidizing gas flow rate detected by the aerometer 42 is lower than the first oxidizing gas flow rate, the operation of the fuel cell apparatus 24 (the fuel cell system 1) is stopped. In this manner, damage to the fuel cell 2 and/or the hydrogen generator 3 can be prevented more effectively.

### (Embodiment 8)

### [Configuration of Fuel Cell System]

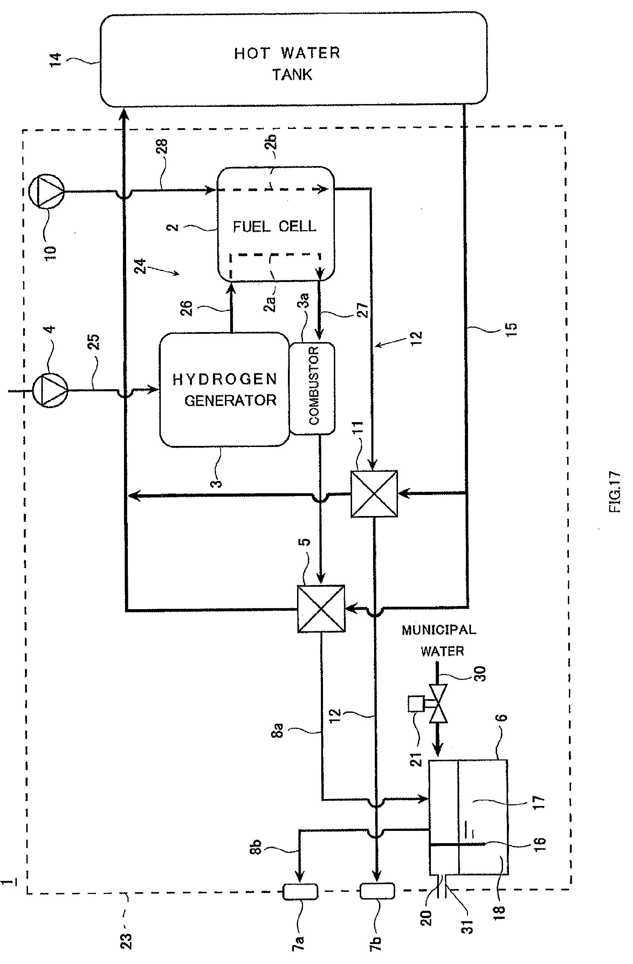

Fig. 17 is a schematic diagram showing a schematic configuration of a fuel cell system according to Embodiment 8 of the present invention.

As shown in Fig. 17, the fundamental configuration of a fuel cell system 1 according to Embodiment 8 of the present invention is the same as that of the fuel cell system 1 according to Embodiment 1. However, the fuel cell system 1 according to Embodiment 8 is different from the fuel cell system 1 according to Embodiment 1 in that the first flue gas passage 8a and the second flue gas passage 8b form the exhaust gas passage, and the air outlet 7 includes a first air outlet 7a through which to discharge a flue gas and a second air outlet 7b through which to discharge an oxidizing exhaust gas.

Moreover, the fuel cell system 1 according to Embodiment 8 is configured such that moisture in the oxidizing exhaust gas which flows through the oxidizing exhaust gas passage 12 is discharged through the second air outlet 7b without being stored in the water tank 6.

In the fuel cell system 1 according to Embodiment 8 having the above configuration, in a case where either the first flue gas passage 8a or the first air outlet 7a is blocked, if the water level of the first reservoir 17 becomes lower than the partition wall 16, then the gas within the first reservoir 17 (which contains the flue gas) is discharged to the outside of the fuel cell system 1 (i.e., to the atmosphere) from the second reservoir 18 through the drain outlet 20.

Accordingly, even if either the first flue gas passage 8a or the first air outlet 7a is blocked, the fuel cell system 1 according to Embodiment 8 prevents the pressure within the first reservoir 17 from reaching the lowest one of the following pressures: the withstand pressure of the fuel cell 2; the withstand pressure of the hydrogen generator 3; the shutoff pressure of the raw material supply device 4; and the shutoff pressure of the oxidizing gas supply device 10. In this manner, damage to the fuel cell 2, the hydrogen generator 3, the raw material supply device 4, and the oxidizing gas supply device 10 can be prevented.

From the foregoing description, numerous modifications and other embodiments of the present invention are obvious to one skilled in the art. Therefore, the foregoing description should be interpreted only as an example and is provided for the purpose of teaching the best mode for carrying out the present invention to one skilled in the art. The structures and/or functional details may be substantially modified without departing from the content of the present invention. In addition, various inventions can be made by suitable combinations of a plurality of components disclosed in the above embodiments.

### Industrial Applicability

The fuel cell system and the method for operating the fuel cell system according to the present invention, which are capable of preventing damage to the hydrogen generator and/or the fuel cell, are useful in the field of fuel cells.

### Reference Signs List

- 1: fuel cell system
- 2: fuel cell
- 2a: internal fuel gas channel
- 2b: internal oxidizing gas channel
- 3: hydrogen generator
- 3a: combustor
- 4: raw material supply device
- 5: flue gas heat exchanger
- 6: water tank
- 7: air outlet
- 7a: first air outlet
- 7b: second air outlet
- 8: flue gas passage
- 8a: first flue gas passage
- 8b: second flue gas passage
- 9: flue gas condensed water passage
- 10: oxidizing gas supply device
- 11: oxidizing exhaust gas heat exchanger
- 12: oxidizing exhaust gas passage
- 12a: first oxidizing exhaust gas passage
- 12b: second oxidizing exhaust gas passage
- 13: oxidizing exhaust gas condensed water passage
- 14: hot water tank
- 15: hot water circulation passage
- 16: partition wall
- 17: first reservoir
- 18: second reservoir
- 19: water level detector
- 20: drain outlet
- 21: water supply valve
- 22: controller
- 23: casing
- 24: fuel cell apparatus
- 25: raw material supply passage
- 26: fuel gas supply passage
- 27: off fuel gas passage
- 28: oxidizing gas supply passage
- 29: communication part
- 30: water supply passage
- 31: drainage passage
- 32: raw material flowmeter
- 42: aerometer
- 60: cell stack body
- 61: cell
- 62: end plate
- 63: end plate
- 64: fuel gas supply manifold
- 65: fuel gas discharge manifold
- 66: oxidizing gas supply manifold
- 67: oxidizing gas discharge manifold
- 71: polymer electrolyte membrane
- 72A: anode
- 72B: cathode
- 73: MEA (Membrane-Electrode Assembly)
- 74: gasket
- 75A: anode separator
- 75B: cathode separator
- 77: fuel gas channel
- 78: oxidizing gas channel
- 201: fuel cell power generator
- 202: fuel cell body
- 203: reformer
- 203a: burner
- 204: reaction air blower
- 205: fuel preheater
- 206: discharged heat recovery device
- 207: exhaust tower
- 207a: air outlet
- 208: filter
- 209: recovery water tank
- 210: generated water recovery device

## Claims

1. A fuel cell system comprising: a fuel cell apparatus (24) configured to generate power by using an oxidizing gas supplied thereto, the oxidizing gas containing a raw material and oxygen; an exhaust gas passage through which an exhaust gas from the fuel cell apparatus (24) is discharged to the atmosphere; and a water tank (6) configured to store water present within the exhaust gas,
the water tank (6) includes a first reservoir (17), a second reservoir (18), a partition wall (16) is provided in a manner to separate the inner space of the water tank (6) to form the first reservoir (17) and the second reservoir (18), and a communication part (29) which is configured to allow the first reservoir (17) and the second reservoir (18) to communicate with each other at a lower part of the water tank (6),
the second reservoir (18) of the water tank (6) is provided with a drain outlet (20) which is disposed above the communication part (29),
the exhaust gas passage includes: a first passage (8) of which one end is connected to the fuel cell apparatus and the other end is connected to the first reservoir (17) of the water tank (6); and a second passage (9) of which one end is connected to the first passage (8) and the other end is open to the atmosphere, and
the exhaust gas passage is configured such that:
in cases where a flow of the exhaust gas is not blocked in the second passage (9), the exhaust gas is discharged to the atmosphere from the exhaust gas passage; and
in cases where a flow of the exhaust gas is blocked in the second passage (9), the exhaust gas is discharged to the atmosphere through the drain outlet (20) of the water tank (6),
the fuel cell system **characterized by** further comprising:
a controller (22); and
a water level detector (19) provided at the first reservoir (17) of the water tank (6) and configured to detect the water level of the first reservoir (17), wherein
the controller (22) is configured to stop the fuel cell apparatus (24) from operating if the water level detector (19) detects, in the water tank (6), a first water level which allows the exhaust gas to be discharged to the atmosphere through the drain outlet (20) of the water tank (6).

2. The fuel cell system according to claim 1, further comprising:
a water supply device (21) configured to supply water to the first reservoir of the water tank (6), wherein
the controller (22) is configured to:
control the water supply device to supply water to the first reservoir (17) of the water tank (6) if the water level detector (19) detects a second water level higher than the first water level, the first water level allowing the exhaust gas to be discharged to the atmosphere through the drain outlet (20) of the water tank (6), and lower than the high water level of the first reservoir (17); and
stop the fuel cell apparatus from operating if the water level detector (19) detects the first water level after a predetermined period has elapsed since the supply of water by the water supply device (21) to the first reservoir (17).

3. The fuel cell system according to claim 1 or claim 2, wherein the first water level is set to a position lower than the upper end of the communication part (29) and higher than the bottom of the water tank (6).

4. The fuel cell system according to any one of claims 1 to 3, wherein
the fuel cell apparatus (24) includes a fuel cell (2),
the fuel cell (2) includes an internal fuel gas channel, through which a fuel gas is supplied to an anode, and an internal oxidizing gas channel, through which the oxidizing gas is supplied to a cathode, and
the exhaust gas passage includes a fuel gas exhaust gas passage of which the upstream end is connected to the downstream end of the internal fuel gas channel, and includes an oxidizing gas exhaust gas passage of which the downstream end is connected to the downstream end of the internal oxidizing gas channel.

5. The fuel cell system according to claim 1, comprising:
a raw material supply device (4) configured to supply the raw material to the fuel cell apparatus (24); and
a raw material flow rate detector (32) configured to detect a flow rate of the raw material which is supplied from the raw material supply device (4) to the fuel cell apparatus (24), wherein
the fuel cell apparatus includes a fuel cell,
the fuel cell includes an internal fuel gas channel, through which a fuel gas is supplied to an anode, and an internal oxidizing gas channel, through which the oxidizing gas is supplied to a cathode,
the exhaust gas passage is connected to the downstream end of the internal fuel gas channel, and
the controller (22) is configured to:
control the raw material supply device, such that the raw material supply device supplies the raw material with supply performance that is set in advance in accordance with the amount of power generated by the fuel cell; and
stop the fuel cell apparatus from operating if the raw material flow rate detector detects a flow rate lower than a first raw material flow rate which is set in advance.

6. The fuel cell system according to claim 1, comprising
a raw material supply device (4) configured to supply the raw material to the fuel cell apparatus (24), wherein
the fuel cell apparatus (24) includes a fuel cell (2),
the fuel cell (2) includes an internal fuel gas channel, through which a fuel gas is supplied to an anode, and an internal oxidizing gas channel, through which the oxidizing gas is supplied to a cathode,
the exhaust gas passage is connected to the downstream end of the internal fuel gas channel, and
the controller (22) is configured to:
perform feedback control of the raw material supply device (4), such that the raw material supply device (4) supplies the raw material at a flow rate that is specified in accordance with the amount of power generated by the fuel cell (2); and
determine that the exhaust gas passage is blocked at a position downstream from the water tank (6) and stop the fuel cell apparatus (24) from operating if supply performance of the raw material supply device (4) exceeds first supply performance which is set in advance.

7. The fuel cell system according to claim 1, comprising:
an oxidizing gas supply device (10) configured to supply the oxidizing gas to the fuel cell apparatus; and
an oxidizing gas flow rate detector (42) configured to detect a flow rate of the oxidizing gas which is supplied from the oxidizing gas supply device (10) to the fuel cell apparatus (24), wherein
the fuel cell apparatus (24) includes a fuel cell (2),
the fuel cell (2) includes an internal fuel gas channel, through which a fuel gas is supplied to an anode, and an internal oxidizing gas channel, through which the oxidizing gas is supplied to a cathode,
the exhaust gas passage is connected to the downstream end of the internal oxidizing gas channel, and
the controller (22) is configured to:
control the oxidizing gas supply device (10), such that the oxidizing gas supply device (10) supplies the oxidizing gas with supply performance that is set in advance in accordance with the amount of power generated by the fuel cell (2); and
stop the fuel cell apparatus (24) from operating if the oxidizing gas flow rate detector (42) detects a flow rate lower than a first oxidizing gas flow rate which is set in advance.

8. The fuel cell system according to claim 1, comprising:
an oxidizing gas supply device (10) configured to supply the oxidizing gas to the fuel cell apparatus (24), wherein
the fuel cell apparatus (24) includes a fuel cell (2),
the fuel cell (2) includes an internal fuel gas channel, through which a fuel gas is supplied to an anode, and an internal oxidizing gas channel, through which the oxidizing gas is supplied to a cathode,
the exhaust gas passage is connected to the downstream end of the internal oxidizing gas channel, and
the controller (22) is configured to:
perform feedback control of the oxidizing gas supply device (10) such that the oxidizing gas supply device (10) supplies the oxidizing gas at a flow rate that is specified in accordance with the amount of power generated by the fuel cell (2); and
determine that the exhaust gas passage is blocked at a position downstream from the water tank (6) and stop the fuel cell apparatus (24) from operating if supply performance of the oxidizing gas supply device (10) exceeds second supply performance which is set in advance.

9. The fuel cell system according to any one of claims 1 to 3, wherein
the fuel cell apparatus (24) includes a fuel cell (2), and
the communication part (29) and the drain outlet (20) are provided at the water tank (6) such that a water pressure difference corresponding to the height of the lower end of the drain outlet (20) from the upper end of the communication part (29) is less than the withstand pressure of the fuel cell (2).

10. The fuel cell system according to any one of claims 1 to 3 and 9, wherein
the fuel cell (2) apparatus includes a hydrogen generator configured to reform the raw material to generate a fuel gas, and
the communication part (29) and the drain outlet (20) are provided at the water tank (6) such that a water pressure difference corresponding to the height of the lower end of the drain outlet (20) from the upper end of the communication part (29) is less than the withstand pressure of the hydrogen generator.

11. The fuel cell system according to any one of claims 1 to 4 and 7 to 10, comprising:
a raw material supply device (4) configured to supply the raw material to the fuel cell apparatus (24); and
an oxidizing gas supply device (10) configured to supply the oxidizing gas to the fuel cell apparatus (24), wherein
the communication part (29) and the drain outlet (20) are provided at the water tank (6) such that a water pressure difference corresponding to the height of the lower end of the drain outlet (20) from the upper end of the communication part (29) is less than the shutoff pressure of at least one of the raw material supply device (4) and the oxidizing gas supply device (10).

12. A method for operating a fuel cell system including: a fuel cell apparatus (24) configured to generate power by using an oxidizing gas supplied thereto, the oxidizing gas containing a raw material and oxygen; an exhaust gas passage through which an exhaust gas from the fuel cell apparatus (24) is discharged to the atmosphere; and a water tank (6) configured to store water present within the exhaust gas,
**characterized in that**
the fuel cell system further includes a water level detector (19) provided at a first reservoir (17) of the water tank (6) and configured to detect the water level of the first reservoir (17),
the water tank (6) includes the first reservoir (17), a second reservoir (18), a partition wall is provided in a manner to separate the inner space of the water tank (6) to form the first reservoir (17) and the second reservoir (18), and a communication part (29) which is configured to allow the first reservoir (17) and the second reservoir (18) to communicate with each other at a lower part of the water tank (6),
the second reservoir (18) of the water tank (6) is provided with a drain outlet (20) which is disposed above the communication part (29),
the exhaust gas passage includes: a first passage (8) of which one end is connected to the fuel cell apparatus (24) and the other end is connected to the first reservoir (17) of the water tank (6); and a second passage (9) of which one end is connected to the first passage (8) and the other end is open to the atmosphere, and
the exhaust gas passage is configured such that:
in cases where a flow of the exhaust gas is not blocked in the second passage (9), the exhaust gas is discharged to the atmosphere from the exhaust gas passage; and
in cases where a flow of the exhaust gas is blocked in the second passage (9), the exhaust gas is discharged to the atmosphere through the drain outlet (20) of the water tank (6),
the method comprising stopping the fuel cell apparatus (24) from operating if the water level detector detects, in the water tank, a first water level which allows the exhaust gas to be discharged to the atmosphere through the drain outlet (20) of the water tank (6).

## Patentansprüche

1. Brennstoffzellensystem, umfassend: eine Brennstoffzellenvorrichtung (24), die dazu konfiguriert ist, durch Verwenden eines zugeführten Oxidationsgases Strom zu erzeugen, wobei das Oxidationsgas einen Rohstoff und Sauerstoff enthält; und einen Abgaskanal, durch den Abgas von der Brennstoffzellenvorrichtung (24) in die Umgebung ausgestoßen wird; und einen Wassertank (6), der dazu zum Speichern von Wasser konfiguriert ist, das in dem Abgas vorhanden ist,
wobei der Wassertank (6) einen ersten Behälter (17) und einen zweiten Behälter (18) aufweist, eine Trennwand (16) so angeordnet ist, dass sie den Innenraum des Wassertanks (6) so unterteilt, dass der erste Behälter (17) und der zweite Behälter (18) gebildet werden, und einen Verbindungsteil (29), der dazu konfiguriert ist, eine Verbindung zwischen dem ersten Behälter (17) und dem zweiten Behälter (18) in einem unteren Teil des Wassertanks (6) zuzulassen,
wobei der zweite Behälter (18) des Wassertanks (6) mit einem Ablaufauslass (20) versehen ist, der oberhalb des Kommunikationsteils (29) angeordnet ist,
wobei der Abgaskanal beinhaltet: einen ersten Kanal (8), dessen eines Ende mit der Brennstoffzellenvorrichtung verbunden ist und dessen anderes Ende mit dem ersten Behälter (17) des Wassertanks (6) verbunden ist; und einen zweiten Kanal (9), dessen eines Ende mit dem ersten Kanal (8) verbunden ist und dessen anderes Ende zu der Umgebung hin offen ist, und
wobei der Abgaskanal so konfiguriert ist, dass:
in dem Fall, dass ein Strom des Abgases in den zweiten Kanal (9) nicht blockiert ist, dass Abgas aus dem Abgaskanal in die Umgebung ausgestoßen wird; und
in dem Fall, dass ein Strom des Abgases in den zweiten Kanal (9) blockiert ist, dass Abgas durch den Ablauf Auslass (20) des Wassertanks (6) in die Umgebung ausgestoßen wird,
wobei das Brennstoffzellensystem **dadurch gekennzeichnet ist, dass** es des Weiteren umfasst:
eine Steuerung (22); und
einen Wasserstandsdetektor (19), der an dem ersten Behälter (17) des Wassertanks (6) angeordnet und dazu konfiguriert ist, den Wasserstand des ersten Behälters (17) zu ermitteln, wobei
die Steuerung (22) zum Stoppen des Betriebs der Brennstoffzellenvorrichtung (24) konfiguriert ist, wenn der Wasserstandsdetektor (19) in den Wassertank (6) einen ersten Wasserstand ermittelt, der das Ausstoßen des Abgases in die Umgebung durch den Ablaufauslass (20) des Wassertanks (6) ermöglicht.

2. Brennstoffzellensystem nach Anspruch 1, des Weiteren umfassend:
eine Wasserzufuhrvorrichtung (21), die zum Zuführen von Wasser zu dem ersten Behälter des Wassertanks (6) konfiguriert ist, wobei
die Steuerung (22) zu Folgendem konfiguriert ist:
Steuern der Wasserzufuhrvorrichtung zum Zuführen von Wasser zu dem ersten Behälter (17) des Wassertanks (6), wenn der Wasserstandsdetektor (19) einen zweiten Wasserstand ermittelt, der höher als der erste Wasserstand ist, wobei der erste Wasserstand das Ausstoßen des Abgases in die Umgebung durch den Ablaufauslass (20) des Wassertanks (6) ermöglicht, und niedriger als der hohe Wasserstand des ersten Behälters (17) ist; und
Stoppen des Betriebs der Brennstoffzellenvorrichtung, wenn der Wasserstandsdetektor (19) den ersten Wasserstand ermittelt, nachdem eine vorgegebene Zeitspanne seit dem Zuführen von Wasser durch die Wasserzufuhrvorrichtung (21) zu dem ersten Behälter (17) verstrichen ist.

3. Brennstoffzellensystem nach Anspruch 1 oder Anspruch 2, wobei der erste Wasserstand auf eine Position eingestellt wird, die niedriger als das obere Ende des Verbindungsteils (Nord 20) und höher als der Boden des Wassertanks (6) ist.

4. Brennstoffzellenstromerzeugungssystem nach einem der Ansprüche 1 bis 3, wobei
die Brennstoffzellenvorrichtung (24) eine Brennstoffzelle (2) beinhaltet,
die Brennstoffzelle (2) einen internen Brenngaskanal aufweist, durch den ein Brenngas zu einer Anode geleitet wird, und einen internen Oxidationsgaskanal, durch den das Oxidationsgas zu einer Kathode geleitet wird, und
der Abgaskanal einen Brenngas-Abgaskanal beinhaltet, dessen vorderes Ende mit dem hinteren Ende des internen Brenngaskanals verbunden ist, und einen Oxidationsgas-Abgaskanal aufweist, dessen hinteres Ende mit dem hinteren Ende des internen Oxidationsgaskanals verbunden ist.

5. Brennstoffzellensystem nach Anspruch 1, umfassend:
eine eine Rohstoffzufuhrvorrichtung (4), die dazu konfiguriert ist, den Rohstoff zu der Brennstoffzellenvorrichtung (24) zu leiten; und
einen Rohstoff-Durchflussratendetektor (32), der dazu konfiguriert ist, eine Durchflussrate des Rohstoffs zu ermitteln, der von der Rohstoffzufuhrvorrichtung (4) zu der Brennstoffzellenvorrichtung (24) geleitet wird, wobei
die Brennstoffzellenvorrichtung eine Brennstoffzelle beinhaltet,
die Brennstoffzelle einen internen Brenngaskanal aufweist, durch den ein Brenngas zu einer Anode geleitet wird, und einen internen Oxidationsgaskanal, durch den das Oxidationsgas zu einer Kathode geleitet wird,
der Abgaskanal mit dem hinteren Ende des internen Brenngaskanals verbunden ist, und
die Steuerung (22) zu Folgendem konfiguriert ist:
Steuern der Rohstoffzufuhrvorrichtung, so dass die Rohstoffzufuhrvorrichtung den Rohstoff mit einer Zufuhrleistung zuführt, die vorab entsprechend der von der Brennstoffzelle erzeugten Energie festgelegt wird; und
Stoppen des Betriebs der Brennstoffzellenvorrichtung, wenn der Rohstoff-Durchflussratendetektor eine Durchflussrate ermittelt, die niedriger als eine erste Rohstoff-Durchflussrate ist, die vorab festgelegt wird.

6. Brennstoffzellensystem nach Anspruch 1, umfassend:
eine eine Rohstoffzufuhrvorrichtung (4), die dazu konfiguriert ist, den Rohstoff zu der Brennstoffzellenvorrichtung (24) zu leiten, wobei
die Brennstoffzellenvorrichtung (24) eine Brennstoffzelle (2) beinhaltet,
die Brennstoffzelle (2) einen internen Brenngaskanal aufweist, durch den ein Brenngas zu einer Anode geleitet wird, und einen internen Oxidationsgaskanal, durch den das Oxidationsgas zu einer Kathode geleitet wird,
der Abgaskanal mit dem hinteren Ende des internen Brenngaskanals verbunden ist, und
die Steuerung (22) zu Folgendem konfiguriert ist:
Durchführen einer Rückkoppelungsregelung der Rohstoffzufuhrvorrichtung (4), so dass die Rohstoffzufuhrvorrichtung (4) den Rohstoff mit einer Zufuhrleistung zuführt, die vorab entsprechend der von der Brennstoffzelle (2) erzeugten Energie festgelegt wird; und
Bestimmen, dass der Abgaskanal an einer Position hinter dem Wassertank (6) blockiert ist und Stoppen des Betriebs der Brennstoffzellenvorrichtung (24), wenn die Zufuhrleistung der Rohstoffzufuhrvorrichtung (4) die erste, vorab festgelegte Zufuhrleistung übersteigt.

7. Brennstoffzellensystem nach Anspruch 1, umfassend:
eine Oxidationsgas-Zufuhrvorrichtung (10), die dazu konfiguriert ist, das Oxidationsgas zu der Brennstoffzellenvorrichtung zu leiten; und
einen Oxidationsgas-Durchflussratendetektor (42), der dazu konfiguriert ist, eine Durchflussrate des Oxidationsgases zu ermitteln, das von der Oxidationsgas-Zufuhrvorrichtung (10) zu der Brennstoffzellenvorrichtung (24) geleitet wird, wobei
die Brennstoffzellenvorrichtung (24) eine Brennstoffzelle (2) beinhaltet,
die Brennstoffzelle (2) einen internen Brenngaskanal aufweist, durch den ein Brenngas zu einer Anode geleitet wird, und einen internen Oxidationsgaskanal, durch den das Oxidationsgas zu einer Kathode geleitet wird,
der Abgaskanal mit dem hinteren Ende des internen Oxidationsgaskanals verbunden ist, und
die Steuerung (22) zu Folgendem konfiguriert ist:
Steuern der Oxidationsgas-Zufuhrvorrichtung (10), so dass die Oxidationsgas-Zufuhrvorrichtung (10) das Oxidationsgas mit einer Zufuhrleistung zuführt, die vorab entsprechend der von der Brennstoffzelle (2) erzeugten Energie festgelegt wird; und
Stoppen des Betriebs der Brennstoffzellenvorrichtung (24), wenn der Oxidationsgas-Durchflussratendetektor (42) eine Durchflussrate ermittelt, die niedriger als eine erste Oxidationsgas-Durchflussrate ist, die vorab festgelegt wird.

8. Brennstoffzellensystem nach Anspruch 1, umfassend:
eine Oxidationsgas-Zufuhrvorrichtung (10), die dazu konfiguriert ist, das Oxidationsgas zu der Brennstoffzellenvorrichtung (24) zu leiten, wobei
die Brennstoffzellenvorrichtung (24) eine Brennstoffzelle (2) beinhaltet,
die Brennstoffzelle (2) einen internen Brenngaskanal aufweist, durch den ein Brenngas zu einer Anode geleitet wird, und einen internen Oxidationsgaskanal, durch den das Oxidationsgas zu einer Kathode geleitet wird,
der Abgaskanal mit dem hinteren Ende des internen Oxidationsgaskanals verbunden ist, und
die Steuerung (22) zu Folgendem konfiguriert ist:
Durchführen einer Rückkoppelungsregelung der Oxidationsgas-Zufuhrvorrichtung (10), so dass die Oxidationsgas-Zufuhrvorrichtung (10) das Oxidationsgas mit einer Zufuhrleistung zuführt, die vorab entsprechend der von der Brennstoffzelle (2) erzeugten Energie festgelegt wird; und
Bestimmen, dass der Abgaskanal an einer Position hinter dem Wassertank (6) blockiert ist und Stoppen des Betriebs der Brennstoffzellenvorrichtung (24), wenn die Zufuhrleistung der Oxidationsgas-Zufuhrvorrichtung (10) eine zweite, vorab festgelegte Zufuhrleistung übersteigt.

9. Brennstoffzellensystem nach einem der Ansprüche 1 bis 3, wobei
die Brennstoffzellenvorrichtung (24) eine Brennstoffzelle (2) beinhaltet, und
der Verbindungsteil (29) und der Ablaufauslass (20) solcher Art an dem Wassertank (6) angeordnet sind, dass eine Wasserdruckdifferenz entsprechend der Höhe des unteren Endes des Ablaufauslasses (20) von dem oberen Ende des Verbindungsteils (29) geringer als der Widerstandsdruck der Brennstoffzelle (2) ist.

10. Brennstoffzellensystem nach einem der Ansprüche 1 bis 3 und 9, wobei
die Brennstoffzellenvorrichtung (2) einen Wasserstoffgenerator aufweist, der dazu konfiguriert ist, den Rohstoff zu reformieren, um ein Brenngas zu erzeugen, und
der Verbindungsteil (29) und der Ablaufauslass (20) solcher Art an dem Wassertank (6) angeordnet sind, dass eine Wasserdruckdifferenz entsprechend der Höhe des unteren Endes des Ablaufauslasses (20) von dem oberen Ende des Verbindungsteils (29) geringer als der Widerstandsdruck des Wasserstoffgenerators ist.

11. Brennstoffzellensystem nach einem der Ansprüche 1 bis 4 und 7 bis 10, umfassend:
eine Rohstoffzufuhrvorrichtung (4), die dazu konfiguriert ist, den Rohstoff zu der Brennstoffzellenvorrichtung (24) zu leiten; und
eine Oxidationsgas-Zufuhrvorrichtung (10), die dazu konfiguriert ist, das Oxidationsgas zu der Brennstoffzellenvorrichtung (24) zu leiten, wobei
der Verbindungsteil (29) und der Ablaufauslass (20) solcher Art an dem Wassertank (6) angeordnet sind, dass eine Wasserdruckdifferenz entsprechend der Höhe des unteren Endes des Ablaufauslasses (20) von dem oberen Ende des Verbindungsteils (29) geringer als der Abschaltdruck von zumindest einer aus der Rohstoffzufuhrvorrichtung (4) und der Oxidationsgas-Zufuhrvorrichtung (10) ist.

12. Verfahren zum Betreiben eines Brennstoffzellensystems, das beinhaltet: eine Brennstoffzellenvorrichtung (24), die dazu konfiguriert ist, durch Verwenden eines zugeführten Oxidationsgases Strom zu erzeugen, wobei das Oxidationsgas einen Rohstoff und Sauerstoff enthält; und einen Abgaskanal, durch den Abgas von der Brennstoffzellenvorrichtung (24) in die Umgebung ausgestoßen wird; und einen Wassertank (6), der dazu zum Speichern von Wasser konfiguriert ist, das in dem Abgas vorhanden ist,
**dadurch gekennzeichnet, dass**
das Brennstoffzellensystem des Weiteren einen Wasserstandsdetektor (19) aufweist, der an einem ersten Behälter (17) des Wassertanks (6) angeordnet und dazu konfiguriert ist, den Wasserstand des ersten Behälters (17) zu ermitteln,
der Wassertank (6) den ersten Behälter (17) und einen zweiten Behälter (18) aufweist, eine Trennwand so angeordnet ist, dass sie den Innenraum des Wassertanks (6) so unterteilt, dass der erste Behälter (17) und der zweite Behälter (18) gebildet werden, und einen Verbindungsteil (29), der dazu konfiguriert ist, eine Verbindung zwischen dem ersten Behälter (17) und dem zweiten Behälter (18) in einem unteren Teil des Wassertanks (6) zuzulassen,
wobei der zweite Behälter (18) des Wassertanks (6) mit einem Ablaufauslass (20) versehen ist, der oberhalb des Kommunikationsteils (29) angeordnet ist,
wobei der Abgaskanal beinhaltet: einen ersten Kanal (8), dessen eines Ende mit der Brennstoffzellenvorrichtung (24) verbunden ist und dessen anderes Ende mit dem ersten Behälter (17) des Wassertanks (6) verbunden ist; und einen zweiten Kanal (9), dessen eines Ende mit dem ersten Kanal (8) verbunden ist und dessen anderes Ende zu der Umgebung hin offen ist, und
wobei der Abgaskanal so konfiguriert ist, dass:
in dem Fall, dass ein Strom des Abgases in den zweiten Kanal (9) nicht blockiert ist, dass Abgas aus dem Abgaskanal in die Umgebung ausgestoßen wird; und
in dem Fall, dass ein Strom des Abgases in den zweiten Kanal (9) blockiert ist, dass Abgas durch den Ablauf Auslass (20) des Wassertanks (6) in die Umgebung ausgestoßen wird,
wobei das Verfahren das Stoppen des Betriebs der Brennstoffzellenvorrichtung (24) umfasst, wenn der Wasserstandsdetektor in dem Wassertank einen ersten Wasserstand ermittelt, der das Ausstoßen des Abgases in die Umgebung durch den Ablaufauslass (20) des Wassertanks (6) ermöglicht.

## Revendications

1. Système de pile à combustible comprenant: un appareil à pile à combustible (24) configuré pour générer de l'énergie en utilisant un gaz oxydant qui lui est fourni, le gaz oxydant contenant une matière première et de l'oxygène, un passage de gaz d'échappement au travers duquel est éjecté un gaz d'échappement de l'appareil à pile à combustible (24), et une citerne d'eau (6) configurée pour stocker l'eau présente dans le gaz d'échappement,
la citerne d'eau (6) inclut un premier réservoir (17), un second réservoir (18), une paroi de séparation (16) est prévue dans le but de séparer l'espace intérieur de la citerne d'eau (6) pour former le premier réservoir (17) et le second réservoir (18), et un dispositif de communication (29) qui est configuré pour permettre au premier réservoir (17) et au second réservoir (18) de communiquer l'un avec l'autre au niveau de la partie inférieure de la citerne d'eau (6),
le second réservoir (18) de la citerne d'eau (6) est muni d'un orifice de sortie de drainage (20) qui est placé au-dessus du dispositif de communication (29),
le passage de gaz d'échappement inclut : un premier passage (8) dont une extrémité est reliée à l'appareil à pile à combustible et dont l'autre extrémité est reliée au premier réservoir (17) de la citerne d'eau (6), ainsi qu'un second passage (9) dont une extrémité est reliée au premier passage (8) et dont l'autre extrémité est ouverte sur l'atmosphère, et
le passage de gaz d'échappement est configuré de telle sorte que :
le gaz d'échappement est éjecté vers l'atmosphère depuis le passage de gaz d'échappement dans les cas où aucun écoulement du gaz d'échappement n'est bloqué dans le second passage (9), et
le gaz d'échappement est éjecté vers l'atmosphère au travers de l'orifice de sortie de drainage (20) de la citerne d'eau (6) dans les cas où l'écoulement du gaz d'échappement est bloqué dans le second passage (9),
le système de pile à combustible étant **caractérisé en ce qu**'il comprend en outre :
un contrôleur (22), et
un détecteur de niveau d'eau (19) prévu au niveau du premier réservoir (17) de la citerne d'eau (6) et configuré pour détecter le niveau d'eau du premier réservoir (17), dans lequel
le contrôleur (22) est configuré pour stopper le fonctionnement de l'appareil à pile à combustible (24) si le détecteur de niveau d'eau (19) détecte, dans la citerne d'eau (6), un premier niveau d'eau qui permet l'éjection du gaz d'échappement vers l'atmosphère au travers de l'orifice de sortie de drainage (20) de la citerne d'eau (6).

2. Système de pile à combustible selon la revendication 1, comprenant en outre :
un dispositif d'alimentation en eau (21) configuré pour fournir de l'eau au premier réservoir de la citerne d'eau (6), dans lequel
le contrôleur (20) est configuré pour :
commander le dispositif d'alimentation en eau pour qu'il fournisse de l'eau au premier réservoir (17) de la citerne d'eau (6) si le détecteur de niveau d'eau (19) détecte un second niveau d'eau supérieur au premier niveau d'eau, le premier niveau d'eau permettant l'éjection du gaz d'échappement vers l'atmosphère au travers de l'orifice sorti de drainage (20) de la citerne d'eau (6), et inférieur au niveau d'eau haut du premier réservoir (17), et
stopper le fonctionnement de l'appareil à pile à combustible si le détecteur de niveau d'eau (19) détecte le premier niveau d'eau après l'écoulement d'un intervalle de temps prédéterminé depuis la fourniture d'eau par le dispositif d'alimentation en eau (21) au premier réservoir (17).

3. Système de pile à combustible selon la revendication 1 ou la revendication 2, dans lequel le premier niveau d'eau est fixé à une position inférieure à celle de l'extrémité supérieure du dispositif de communication (29) et plus haute que le fond de la citerne d'eau (6).

4. Système de pile à combustible selon l'une quelconque des revendications 1 à 3, dans lequel :
l'appareil à pile à combustible (24) inclut une pile à combustible (2),
la pile à combustible (2) inclut un canal interne de gaz combustible au travers duquel un gaz combustible est fourni à une anode, ainsi qu'un canal interne de gaz oxydant au travers duquel le gaz oxydant est fourni à une cathode, et
le passage de gaz d'échappement inclut un passage de gaz d'échappement pour gaz combustible dont l'extrémité en amont est raccordée à l'extrémité en aval du canal interne de gaz combustible, et il inclut un passage de gaz d'échappement pour gaz oxydant dont l'extrémité en aval est raccordée à extrémité en aval du canal interne de gaz oxydant.

5. Système de pile à combustible selon la revendication 1, comprenant :
un dispositif d'alimentation en matière première (4) configuré pour fournir la matière première à l'appareil à pile à combustible (24), et
un détecteur de débit d'écoulement de matière première (32) configuré pour détecter le débit d'écoulement de la matière première qui est fournie depuis le dispositif d'alimentation en matière première (4) à l'appareil à pile à combustible (24), dans lequel
l'appareil à pile à combustible inclut une pile à combustible,
la pile à combustible inclut un canal interne de gaz combustible au travers duquel un gaz combustible est fourni à une anode, ainsi qu'un canal interne de gaz oxydant au travers duquel le gaz oxydant est fourni à une cathode, et
le passage de gaz d'échappement est raccordé à l'extrémité en aval du canal interne de gaz combustible, et
le contrôleur (22) est configuré pour :
commander le dispositif d'alimentation en matière première de telle sorte que le dispositif d'alimentation en matière première fournisse la matière première avec des performances d'alimentation qui sont fixées à l'avance en fonction de la quantité d'énergie générée par la pile à combustible, et
stopper le fonctionnement de l'appareil à pile à combustible si le détecteur de débit d'écoulement de matière première détecte un débit d'écoulement inférieur à un premier débit d'écoulement de matière première qui est fixé à l'avance.

6. Système de pile à combustible selon la revendication 1, comprenant :
un dispositif d'alimentation en matière première (4) configuré pour fournir la matière première à l'appareil à pile à combustible (24), dans lequel :
l'appareil à pile à combustible (24) inclut une pile à combustible (2)
la pile à combustible (2) inclut un canal interne de gaz combustible au travers duquel un gaz combustible est fourni à une anode, ainsi qu'un canal interne de gaz oxydant au travers duquel le gaz oxydant est fourni à une cathode, et
le passage de gaz d'échappement est raccordé à l'extrémité en aval du canal interne de gaz combustible, et
le contrôleur (22) est configuré pour :
effectuer une commande par rétroaction du dispositif d'alimentation en matière première (4) de telle sorte que le dispositif d'alimentation en matière première (4) fournisse la matière première à un débit d'écoulement qui est spécifié en fonction de la quantité d'énergie générée par la pile à combustible (2), et
déterminer que le passage de gaz d'échappement est bloqué à une position en aval de la citerne d'eau (6) et stopper le fonctionnement de l'appareil à pile à combustible (24) si les performances d'alimentation du dispositif d'alimentation en gaz oxydant (10) dépassent de premières performances d'alimentation qui sont fixées à l'avance.

7. Système de pile à combustible selon la revendication 1, comprenant :
un dispositif d'alimentation en gaz oxydant (10) configuré pour fournir le gaz oxydant à l'appareil à pile à combustible (24), et
un détecteur de débit d'écoulement de gaz oxydant (42) configuré pour détecter un débit d'écoulement du gaz oxydant qu'il est fourni depuis le dispositif d'alimentation en gaz oxydant (10) à l'appareil à pile à combustible (24), dans lequel :
l'appareil à pile à combustible (24) inclut une pile à combustible (2),
la pile à combustible (2) inclut un canal interne de gaz combustible au travers duquel un gaz combustible est fourni à une anode, ainsi qu'un canal interne de gaz oxydant au travers duquel le gaz oxydant est fourni à une cathode, et
le passage de gaz d'échappement est raccordé à l'extrémité en aval du canal interne de gaz oxydant, et
le contrôleur (22) est configuré pour :
commander le dispositif d'alimentation en gaz oxydant (10) de telle sorte que le dispositif d'alimentation en gaz oxydant (10) fournisse le gaz oxydant avec des performances d'alimentation qui sont fixées à l'avance en fonction de la quantité d'énergie générée par la pile à combustible (2), et
stopper le fonctionnement de l'appareil à pile à combustible (24) si le détecteur de débit d'écoulement de gaz oxydant (42) détecte un débit d'écoulement inférieur à un premier débit d'écoulement de gaz oxydant qui est fixé à l'avance.

8. Système de pile à combustible selon la revendication 1, comprenant :
un dispositif d'alimentation en gaz oxydant (10) configuré pour fournir le gaz oxydant à l'appareil à pile à combustible (24), dans lequel
l'appareil à pile à combustible (24) inclut une pile à combustible (2),
la pile à combustible (2) inclut un canal interne de gaz combustible au travers duquel un gaz combustible est fourni à une anode, ainsi qu'un canal interne de gaz oxydant au travers duquel le gaz oxydant est fourni à une cathode, et
le passage de gaz d'échappement est raccordé à l'extrémité en aval du canal interne de gaz combustible,
le contrôleur (22) est configuré pour :
effectuer une commande par rétroaction du dispositif d'alimentation en gaz oxydant (10) de telle sorte que le dispositif d'alimentation en gaz oxydant (10) fournisse le gaz oxydant à un débit d'écoulement qui est spécifié en fonction de la quantité d'énergie générée par la pile à combustible (2), et
déterminer que le passage de gaz d'échappement est bloqué à une position en aval de la citerne d'eau (6) et stopper le fonctionnement de l'appareil à pile à combustible (24) si les performances d'alimentation du dispositif d'alimentation en gaz oxydant (10) dépassent de secondes performances d'alimentation qui sont fixées à l'avance.

9. Système de pile à combustible selon l'une quelconque des revendications 1 à 3, dans lequel :
l'appareil à pile à combustible (24) inclut une pile à combustible (2), et
le dispositif de communication (29) et l'orifice de sortie de drainage (20) sont prévus au niveau de la citerne d'eau (6) de telle sorte que la différence de pression d'eau correspondant à la hauteur de l'extrémité inférieure de l'orifice de sortie de drainage (20) à partir de l'extrémité supérieure du dispositif de communication (29) soit inférieure à la pression de tenue de la pile à combustible (2).

10. Système de pile à combustible selon l'une quelconque des revendications 1 à 3 et la revendication 9, dans lequel :
l'appareil à pile à combustible (24) inclut un générateur d'hydrogène configuré pour reformer la matière première afin de générer un gaz combustible, et
le dispositif de communication (29) et l'orifice de sortie de drainage (20) sont prévus au niveau de la citerne d'eau (6) de telle sorte que la différence de pression d'eau correspondant à la hauteur de l'extrémité inférieure de l'orifice de sortie de drainage (20) à partir de l'extrémité supérieure du dispositif de communication (29) soit inférieure à la pression de tenue du générateur d'hydrogène

11. Système de pile à combustible selon l'une quelconque des revendications 1 à 4 et 7 à 10, comprenant :
un dispositif d'alimentation en matière première (4) configuré pour fournir la matière première à l'appareil à pile à combustible (24), et
un dispositif d'alimentation en gaz oxydant (10) configurée pour fournir le gaz oxydant à l'appareil à pile à combustible (24), dans lequel
le dispositif de communication (29) et l'orifice de sortie de drainage (20) sont prévus au niveau de la citerne d'eau (6) de telle sorte que la différence de pression d'eau correspondant à la hauteur de l'extrémité inférieure de l'orifice de sortie de drainage (20) à partir de l'extrémité supérieure du dispositif de communication (29) soit inférieure à la pression à débit nul d'au moins l'un du dispositif d'alimentation en matière première (4) et du dispositif d'alimentation en gaz oxydant (10).

12. Procédé de mise en oeuvre d'un système de pile à combustible incluant : un appareil à pile à combustible (24) configuré pour générer de l'énergie en utilisant un gaz oxydant qui lui est fourni, le gaz oxydant contenant une matière première et de l'oxygène, un passage de gaz d'échappement au travers duquel est éjecté un gaz d'échappement de l'appareil à pile à combustible (24), et une citerne d'eau (6) configurée pour stocker l'eau présente dans le gaz d'échappement,
**caractérisé en ce que**
le système de pile à combustible inclut en outre un détecteur de niveau d'eau (19) prévu au niveau d'un premier réservoir (17) de la citerne d'eau (6) et configuré pour détecter le niveau d'eau du premier réservoir (17),
la citerne d'eau (6) inclut le premier réservoir (17), un second réservoir (18), une paroi de séparation (16) est prévue dans le but de séparer l'espace intérieur de la citerne d'eau (6) pour former le premier réservoir (17) et le second réservoir (18), et un dispositif de communication (29) qui est configuré pour permettre au premier réservoir (17) et au second réservoir (18) de communiquer l'un avec l'autre au niveau de la partie inférieure de la citerne d'eau (6),
le second réservoir (18) de la citerne d'eau (6) est muni d'un orifice de sortie de drainage (20) qui est placé au-dessus du dispositif de communication (29),
le passage de gaz d'échappement inclut : un premier passage (8) dont une extrémité est reliée à l'appareil à pile à combustible (24) et dont l'autre extrémité est reliée au premier réservoir (17) de la citerne d'eau (6), ainsi qu'un second passage (9) dont une extrémité est reliée au premier passage (8) et dont l'autre extrémité est ouverte sur l'atmosphère, et
le passage de gaz d'échappement est configuré de telle sorte que :
le gaz d'échappement est éjecté vers l'atmosphère depuis le passage de gaz d'échappement dans les cas où aucun écoulement du gaz d'échappement n'est bloqué dans le second passage (9), et
le gaz d'échappement est éjecté vers l'atmosphère au travers de l'orifice de sortie de drainage (20) de la citerne d'eau (6) dans les cas où l'écoulement du gaz d'échappement est bloqué dans le second passage (9),
le procédé comprenant l'arrêt du fonctionnement de l'appareil à pile à combustible (24) si le détecteur de niveau d'eau détecte, dans la citerne d'eau, un premier niveau d'eau qui permet l'éjection du gaz d'échappement vers l'atmosphère au travers de l'orifice de sortie de drainage (20) de la citerne d'eau (6).
